# EUROPÄISCHE PATENTSCHRIFT

(11) **EP 3 669 974 B1**
(45) Veröffentlichungstag und Bekanntmachung des Hinweises auf die Patenterteilung: **07.06.2023**
(21) Anmeldenummer: 19217879.6
(22) Anmeldetag: 19.12.2019
(51) Int. Cl.: B01D 67/00, B01D 69/12, B01D 71/02, B01D 71/70

(54) **VERBUNDKÖRPER**
LAMINATED BODY
CORPS COMPOSITE

(30) Priorität: 20.12.2018 EP 18214644
(43) Veröffentlichungstag der Anmeldung: 24.06.2020
(73) Patentinhaber: Evonik Operations GmbH, 45128 Essen (DE)
(72) Erfinder: Hying, Christian, 46414 Rhede (DE); Grzenia, David, 45665 Recklinghausen (DE); Terwonne, Rolf-Walter, 45772 Marl (DE); Brugger, Bastian Matthias, 47199 Duisburg (DE); Khaletskaya, Kira, 40476 Düsseldorf (DE); Conradi, Oliver, 40545 Düsseldorf (DE); Nettelnbreker, Hans-Jürgen, 45721 Haltern (DE); Paasche, Alexander, 45721 Haltern am See (DE)
(74) Vertreter: Evonik Patent Association

(56) Entgegenhaltungen:
- WO-A1-99/15257
- WO-A1-2005/038959
- WO-A1-2017/106886

## Beschreibung

Die vorliegende Erfindung betrifft einen Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus AI₂O₃, ZrOz, TiOz und SiOz aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus AI₂O3, ZrOz, TiOz und SiOz aufweisen, aufweist, wobei die in der Schicht (1) vorhandenen Oxidpartikel eine größere mittlere Partikelgröße aufweisen als die in der Schicht (2) vorhandenen Oxidpartikel, welcher dadurch gekennzeichnet ist, dass die mittlere Partikelgröße (d₅₀) der Oxidpartikel in der Schicht (1) von 0,5 bis 4 µm beträgt und die mittlere Partikelgröße (d₅₀) der Oxidpartikel in der Schicht (2) von 0,015 bis 0,15 µm, bevorzugt 0,04 bis 0,06 µm beträgt, ein Verfahren zur Herstellung von entsprechenden Verbundkörpern und deren Verwendung, insbesondere in der Gastrennung.

Bei der Förderung von Erdgas werden mehr und mehr auch Lagerstätten ausgebeutet, die neben Methan auch einen großen Anteil an weiteren Begleitstoffen enthalten. Ein Teil dieser Begleitstoffe kann im Erdgas verbleiben, ein anderer Teil muss im Rahmen der Erdgasaufbereitung abgetrennt werden. Zu Letzterem zählen solche Stoffe die Korrosion in Leitungen und Behältern verursachen können, aber auch Stoffe die den Brennwert des Gases reduzieren. Entfernt oder deutlich in ihrer Konzentration herabgesetzt werden üblicherweise, soweit im Übermaß vorhanden, Wasser, Kohlendioxid, Stickstoff Quecksilber und Schwefelwasserstoff. Im Kontext dieser Schrift ist insbesondere die Abtrennung von Kohlendioxid relevant. Stand der Technik ist eine Abtrennung über eine Aminwäsche, mit der heute ca. 90 % des Erdgases aufgereinigt wird. Es ist zu erwarten, dass zukünftig der Anteil der unerwünschten Begleitsubstanzen in den geförderten Gasen deutlich zunehmen wird. Erste Quellen mit bis zu 50 % COz werden beispielsweise im asiatischen Raum ausgebeutet.

Da bei einer Aminwäsche das Amin nach Sorption des Kohlendioxids durch eine Desorption unter Energieeinsatz wieder regeneriert werden muss, werden in neuester Zeit verstärkt auch Membranen zur Abtrennung großer Anteile dieser Verunreinigungen eingesetzt. Der Einsatz von Membranen hat den Vorteil, dass kleinere Anlage (mit weniger Platzbedarf), ein einfacherer Betrieb und keine flüssigen Chemikalien eingesetzt werden können/müssen.

Die am häufigsten eingesetzten Membranen werden als asymmetrische Polymermembranen in Form von Hohlfasermembranen oder Flachmembranen aus Celluloseacetaten hergestellt und angewendet. Die Trennleistung der Celluloseacetat-Membranen nimmt in der Anwendung aber aufgrund verschiedener Effekte ab, so dass die in der Anwendung realisierte Trennung häufig nicht einen hinreichend großen Trennfaktor erreicht, bzw. nach längerem Betrieb deutlich von diesem nach unten abweicht. Daher gibt es vielfältige Aktivitäten den Trennfaktor (bzw. die Reingasselektivität) z. B. durch Modifikation von Polymeren zu verbessern.

Die Abnahme der Trennleistung in der realen Anwendung lässt sich in vielen Fällen auf die Sorption höherer Kohlenwasserstoffe (hier definiert als Kohlenwasserstoffe mehr als 5 Kohlenstoffatomen) im Polymer und die damit verbundene Erweichung der Polymere zurückführen. Dieser Effekt ist bei perfluorierten Polymeren deutlich reduziert, bzw. kaum vorhanden. Daher eigenen sich diese Polymere gut als selektives Material für Trennaufgaben, bei denen höhere Kohlenwasserstoffe mit einem Anteil im Gas enthalten sind, der nahe des Taupunktes für diese Verbindungen liegt.

Die Herstellung einer asymmetrischen Membran, welche vollständig aus Fluorpolymeren besteht, ist wirtschaftlich nicht sinnvoll, so dass ausschließlich Komposit-Membranen mit einem minimalen Anteil eines fluorierten Polymers für die Anwendungen in Frage kommen. Hierbei sollte die Unterstruktur aber so gewählt sein, dass diese sich auch nicht durch die genannten Verunreinigungen verändert. Dadurch scheiden nahezu alle Polymere hierfür aus.

In WO 2007/149640 A2 hat die Firma Porogen vorgeschlagen, eine Fluorpolymer-Schicht auf einem porösen PEEK-Träger (PEEK-Folie) aufzubringen. Eine Herausforderung stellte dabei die Anbindung der Fluorpolymeren über funktionelle Gruppen an den Träger dar.

In DE 198 38 800 wird ein elektrischer Separator mit einer Verbundstruktur vorgeschlagen, der ein flächiges, mit einer Vielzahl von Öffnungen versehenes, flexibles Substrat mit einer darauf befindlichen Beschichtung umfasst. Das Material des Substrates ist ausgewählt aus Metallen, Legierungen, Kunststoffen, Glas und Kohlefaser oder einer Kombination solcher Materialien, und die Beschichtung ist eine flächig durchgehende, poröse, elektrisch nicht leitende keramische Beschichtung. Der Einsatz der keramischen Beschichtung verspricht thermische und chemische Beständigkeit.

Dass solche Verbundkörper mit Polymeren ausgerüstet werden können, beschreibt z. B. EP 1925047 A1. Die eingesetzten Polymere sollen dort aber im Wesentlichen sphärische Strukturen aufweisen und innerhalb des Verbundkörpers vorliegen.

Professor James Economy's Gruppe veröffentlichte einen Bericht über ein Forschungsvorhaben zur Herstellung von Dünnschichtkomposit-Membranen (TFC-Membranen), bei der eine selektive Schicht auf einen porösen Träger, wie z.B. eine Polysulfon- oder Keramik-Membran aufgebracht wird (http://economy.matse.illinois.edu/membrane.htm).

In DE 10139559 A1 werden Hybridmembranen beschrieben, bei denen keramische Membranen mit organischen Trennschichten ausgerüstet werden. Diese sollen eine bessere Langzeitstabilität als Membranen mit Trägern aus Polymeren aufweisen, haben aber eine ungleichmäßige Polymeroberfläche. In DE 10208278 A1 werden ähnliche Hybridmembranen beschrieben, bei denen die keramischen Membranen aber auf einem polymeren Trägermaterial, insbesondere Polymervlies basieren.

Mehrschichtige, im Wesentlichen keramische Verbundwerkstoffe sind auch bereits aus DE 10255121 A1 bekannt. Die dort beschriebenen Verbundwerkstoffe werden als Batterieseparatoren eingesetzt.

Weitere keramische Verbundwerkstoffe zur Herstellung von Gastrennmembranen sind in der WO99/15257 offenbart.

Aufgabe der vorliegenden Erfindung war die Bereitstellung eines Trägermaterials, das für die Herstellung von Komposit-Membranen, die trennaktive Schichten auf Basis von Polymeren aufweisen, geeignet ist und vorzugsweise einen oder mehrere Nachteile der aus dem Stand der Technik bekannten Trägermaterialien nicht aufweist.

Überraschenderweise wurde nun gefunden, dass durch mehrfaches Aufbringen von Oxid-Partikel-Schichten Verbundkörper erhalten werden können, die eine sehr glatte Oberfläche aufweisen und bei der Verwendung als Trägermaterialien für polymere Trennschichten zu gleichmäßigen Polymeroberflächen führen.

Gegenstand der vorliegenden Erfindung sind deshalb Verbundkörper, ein Verfahren zur Herstellung von Verbundkörpern und die Verwendung dieser Verbundkörper wie in den Ansprüchen beansprucht und nachfolgend detailiert beschrieben.

Gegenstand der vorliegenden Erfindung ist insbesondere ein Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrOz, TiO2 und SiOz aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus AI₂O3, ZrOz, TiOz und SiOz aufweisen, aufweist, wobei die in der Schicht (1) vorhandenen Oxidpartikel eine größere mittlere Partikelgröße aufweisen als die in der Schicht (2) vorhandenen Oxidpartikel, welcher dadurch gekennzeichnet ist, dass die mittlere Partikelgröße (d₅₀) der Oxidpartikel in der Schicht (1) von 0,5 bis 4 µm beträgt und die mittlere Partikelgröße (d₅₀) der Oxidpartikel in der Schicht (2) von 0,015 bis 0,01 µm, bevorzugt 0,04 bis 0,06 µm beträgt, ein Verfahren zur Herstellung von entsprechenden Verbundkörpern und deren Verwendung, insbesondere in der Gastrennung.

Die erfindungsgemäßen Verbundkörper haben den Vorteil, dass Sie eine sehr glatte und feinporige Oberfläche aufweisen, so dass trennaktive Polymerschichten bzw. -filme aufgebracht werden können, die an allen Stellen eine nahezu gleichmäßige Dicke aufweisen.

Weiterhin hat der erfindungsgemäße Verbundkörper den Vorteil, dass er so flexibel sein kann, vorzugsweise ist, dass er mit den üblichen Methoden zu Membranmodulen, insbesondere zu sog. Spiralwickelmodulen, weiterverarbeitet werden kann. Diese Membranmodule stellen die übliche Anwendungsform von Membranen dar. Es handelt sich hier um einfach handhabbare Aggregate, durch die die in ihnen verbaute Membran z.B. in Anlagen der Industrie eingebracht werden kann.

Die erfindungsgemäßen Verbundkörper, die eine(n) Polymerschicht bzw. -film aufweisen, die perfluorierte Polymere enthält oder daraus besteht, können als Gastrennmembranen geeignet sein, insbesondere zur Trennung von COz und Methan. Der Reingasselektivität (COz / CH₄) dieser Trennung kann > 10, bevorzugt > 13 bis 23, bestimmt bei Raumtemperatur und 30 bar Feeddruck betragen.

Als Reingasselektivität wird im Rahmen der vorliegenden Erfindung das Verhältnis der Gasflüsse der jeweils betrachteten Reingase durch eine Membran unter gleichen Messbedingungen (Membranfläche, Druck und Temperatur) verstanden, wobei im Nenner jeweils das Gas steht, welches den niedrigeren Gasfluss aufweist. Der Gasfluss durch eine Membran wird üblicherweise in GPU (Gas Permeation Unit), angegeben, welche einem permeierenden Volumen unter Normbedingungen pro Flächeneinheit, Zeit und Differenzdruck entspricht. Dabei entspricht ein Fluss von einem GPU 0,0027 Nm³/(m²h bar).

Durch die gleichmäßige Dicke kann erreicht werden, dass die gesamte Oberfläche der trennaktiven Schicht (Polymerschicht) keine Fehlstellen, wie z.B. Löcher, und an der Oberfläche eine homogene Durchlässigkeit, aufweist. Dies ist durch punktuelle Flussmessungen mit den entsprechenden Gasen nachweisbar.

Der (Gas-)Fluss durch die erfindungsgemäße Gastrennmembran kann bei größer 20 GPU vorzugsweise bei > 50 GPU für Kohlendioxid liegen. Durch die homogene Durchlässigkeit der Oberfläche der Gastrennmembran wird vermieden, dass einige Regionen der Gastrennmembran bevorzugt durchströmt werden und diese Bereiche besonders schnell von Fremdstoffen, die in nicht zu vernachlässigenden Konzentrationen z .B. in Erdgas enthalten sind, wie höhere Kohlenwasserstoffen oder Schwefelwasserstoff, beeinträchtigt werden, was zu einem schnellen Absinken der Trennleistung in den entsprechenden Teilbereichen der Membrane führen würde.

Durch die Größe der eingesetzten Oxidpartikel wird eine gleichmäßige Imprägnierung des Substrates erzielt, die sicherstellt, dass es nicht zu Hohlräumen und Lufteinschlüssen im Verbundkörper kommt. Dieses stellt sicher, dass der Verbundkörper bei Druckbeaufschlagung nicht kompaktiert und die Porenstruktur des Verbundkörpers nicht zerstört wird. Zudem kann durch die Größe der eingesetzten Oxidpartikel die Porenweite des Verbundkörpers eingestellt werden.

Durch die Verwendung der geeigneten Kombination von Fasern aufweisenden Substraten, insbesondere nicht gewebten Substraten, in Kombination mit den Oxidpartikeln kann eine Zugfestigkeit des erfindungsgemäßen Verbundkörpers von > 40 N/m in Maschinenrichtung erreicht werden.

Durch die Verwendung von perfluorierten Polymere zur Herstellung der trennaktiven Schicht kann eine Veränderung der Trenneigenschaften bei Vorhandensein typischer kritischer Verunreinigungen wie z.B. höherer Kohlenwasserstoffe, wie Propan, Butan oder auch Benzol oder Toluol, vermieden werden.

Der erfindungsgemäße Verbundkörper, das erfindungsgemäße Verfahren zur Herstellung eines Verbundkörpers und die erfindungsgemäße Verwendung des Verbundkörpers werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten, Gasflüsse, Selektivitäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Der erfindungsgemäße Verbundkörper, der auf einem porösen Substrat und in den Zwischenräumen des Substrats, welches Fasern aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO₂ und SiO₂, besonders bevorzugt ausgewählt aus Al₂O₃ und SiO₂, aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O₃, ZrO₂, TiO₂ und SiO₂, besonders bevorzugt ausgewählt aus Al₂O₃ und SiO₂, aufweisen, aufweist, wobei die in der Schicht (1) vorhandenen Oxidpartikel eine größere mittlere Partikelgröße aufweisen als die in der Schicht (2) vorhandenen Oxidpartikel, ist dadurch gekennzeichnet, dass die mittlere Partikelgröße (d₅₀) der Oxidpartikel in der Schicht (1) von 0,5 bis 4 µm beträgt und die mittlere Partikelgröße (d₅₀) der Oxidpartikel in der Schicht (2) von 0,015 bis 0,15 µm, bevorzugt 0,04 bis 0,06 µm beträgt.

Die Bestimmung der mittleren Partikelgröße in den Schichten kann durch Anfertigen von rasterelektronenmikroskopischen Aufnahmen (z.B. mit Rasterelektronenmikroskop JEOL JSM IT300) und Durchführung einer Bildauswertung erfolgen. Alternativ kann die Partikelgröße der verwendeten Partikel, vor der Beschichtung und Verfestigung in der Dispersion, auch über geeignete Geräte zur Partikelgrößenmessung (Mastersizer Hydro 2000S, Malvern Panalytical, Malvern, UK)) mittels statischer Lichtstreuung, angelehnt an ISO 13320, bestimmt werden. Dieses Gerät misst die Größe von Partikeln mithilfe von Laserbeugung. Dazu muss der Brechungsindex der zu messenden Partikel bekannt sein und in der Software hinterlegt werden. Für die Messung der Partikelgrößenverteilung wird der zu messende Feststoff mittels Rühren bei 1750 U/min und bei Bedarf unter Hinzunahme von Ultraschall in VE-Wasser dispergiert. Von der dispergierten Probe wird ein so großes Aliquot in das Dispergiermodul des Messgerätes pipettiert, dass die Laserverdunklung zwischen 15 und 20 % liegt. Mit dem Mastersizer Hydro 2000S wird die Intensität des von der Probe gestreuten Lichts zweier Laserstrahlen (Wellenlänge 633 nm und 466 nm) gemessen. Die Auswertung der räumlichen Verteilung der Streuintensitäten erfolgt mittels der Mie-Theorie. Hieraus werden die Partikelgröße und die Partikelgrößenverteilung ermittelt. Die Messergebnisse werden als Verteilungskurve angegeben, somit erhält man nicht nur eine Aussage über die mittlere Partikelgröße sondern auch Informationen über die kleinsten und über die größten Partikel in der Probe. Der d₅₀ gibt dabei die mittlere Partikelgröße an. Als d₅₀ wird in diesem Zusammenhang der Durchmesser bezeichnet bei dem 50% der volumengewichteten Größenverteilung kleiner als dieser Durchmesser sind. Weitere Parameter sind demzufolge der d₁₀, als Maß für die kleinsten Partikel, sowie d₉₀, für die größeren Partikel in der Probe. Je enger d₁₀ und d₉₀ zusammenliegen, desto enger ist die Partikelgrößenverteilung.

Besonders bevorzugt sind die Oxidpartikel, die ein Oxid ausgewählt aus AI₂O₃ und SiOz aufweisen oder daraus bestehen. Ganz besonders bevorzugte Oxidpartikel mit einer mittleren Partikelgröße (d₅₀) von 0,015 bis 0,15 µm, bevorzugt 0,04 bis 0,06 µm sind solche, die auf SiOz basieren oder daraus bestehen. Beispiele für besonders bevorzugte Oxidpartikel sind pyrogene Oxidpartikel, wie sie unter dem Markennamen Aerosil^{®} oder Aeroxide^{®} von Evonik Resource Efficiency angeboten werden oder vergleichbare Produkte anderer Anbieter.

Der erfindungsgemäße Verbundkörper weist vorzugsweise eine Gurley-Zahl von 200 bis 1700 sec, bevorzugt 250 bis 1200 sec und besonders bevorzugt von 300 bis 800 sec auf.

Die Gurley-Zahl ist ein Maß für die Luftdurchlässigkeit eines porösen Werkstoffs. Sie ist definiert als die Zeit in Sekunden, die benötigt wird, damit 100 cm³ Luft unter definierten Bedingungen durch einen inch² einer Probe zu diffundieren. Zur Bestimmung werden mit einem Lochhenkeleisen kreisrunde Proben mit Durchmesser 44 mm ausgestanzt. Auf dem Lichttisch wird die zu untersuchende Probe auf Fehler evtl. Löcher begutachtet. Nur optisch einwandfreie Proben sind für die Messung geeignet. Vor Beginn der Messung ist zu prüfen, dass am Messgerät (Densometer Modell Nr. 411ON, Gurley Precision Instruments, Troy, NY) die Libelle justiert und der äußere Zylinder bis zur Füllmarke mit Densometer-Öl der Fa. Gurley Precicions Instruments gefüllt ist. Der Densometer-Prüfvorgang besteht in der Messung der Zeit, die notwendig ist zum Durchfluten einer bestimmten Luftmenge durch eine bestimmte Probenfläche unter einheitlichem leichten Druck. Die Druckluft wird durch einen Innenzylinder von genauem Durchmesser und mit Standardgewicht erzeugt und fließt frei in einen Außenzylinder, der teilweise mit Öl gefüllt ist, welches zur Luftabdichtung dient.

Der erfindungsgemäße Verbundkörper weist vorzugsweise eine Dicke von 100 bis 400 µm, bevorzugt 125 bis 200 µm und besonders bevorzugt von 130 bis 170 µm auf. Die Dickenbestimmung erfolgte mit einer Messbügelschraube der Fa. Mitutoyo (Digimetic Micrometer MDC-25PX, 0-25µm).

Der erfindungsgemäße Verbundkörper weist vorzugsweise eine mittlere Porenweite von 60 bis 140 , bevorzugt 75 bis 130 nm, auf. Die Bestimmung der mittleren Porenweite erfolgt mittels Gasfluss Porometrie wie nachfolgend beschrieben mit einem Porolux 1000 (Porometer, Eke, Belgien).

Dazu wird aus dem zu analysierenden Material eine kreisrunde Probe mit Durchmesser 25 mm ausgestanzt, bei 100 °C für 1 Stunde im Trockenschrank getrocknet um Feuchtigkeit aus den Poren zu entfernen, und anschließend unverzüglich in der Benetzungsflüssigkeit Porefil eingelegt, damit sämtliche vorhandenen Poren mit dieser Flüssigkeit gefüllt sind. Anschließend wird die Probe durch kurzzeitiges Anlegen von Vakuum (150 mbar) im Exsikkator entgast, um sicherzustellen, dass alle Poren mit Porefil gefüllt sind. Die entgaste Probe wird in den Probenhalter des Messgerätes eingelegt und der Probenhalter verschraubt.

Die Bestimmung der Porenradienverteilung beruht auf dem Messprinzip der Kapillarfluss-Porometrie. Die mit der Benetzungsflüssigkeit getränkte und entgaste Probe wird in der Messzelle mit einem schrittweise ansteigendem Inertgas-Druck (Stickstoff) beaufschlagt und die dem anliegenden Druck entsprechenden Porendurchmesser werden durch den Gasdruck entleert. Dabei wird die Flussrate des Gases bei ansteigenden Drücken aufgenommen. In den durchgängigen Poren findet ein Austausch der Benetzungsflüssigkeit mit Stickstoff statt. Dies erfolgt solange, bis der relevante Porenbereich erfasst wurde, d.h. bis auch die kleinsten im Messbereich vorhandenen Poren von Flüssigkeit befreit sind. Anschließend wird der Druck in der Messzelle wieder abgesenkt und die Messung an der nun trockenen Probe wiederholt. Aus der Differenz der Nasskurve und der Trockenkurve wird die Porengrößenverteilung berechnet. Die Porometrie-Messungen führen zur Kenntnis der größten vorhandenen Porenradien (sogenannter "bubble point"), sowie den häufigsten und den kleinsten Porendurchmessern.

Der erfindungsgemäße Verbundkörper weist auf der Oberfläche der Schicht (2) eine Oberflächenrauhigkeit Sdq, bestimmt wie nachfolgend beschrieben, von bevorzugt kleiner 10 µm, besonders bevorzugt von kleiner als 8 µm auf.

Die Bestimmung der Oberflächenrauhigkeit erfolgt bezogen auf eine Messfläche von 2 cm * 2 cm, gemessen mittels Konfokalmikroskopie (http://ak-rauheit.de/files/3D%20Kennq r%F6%DFen. pdf).

Die Bestimmung kann beispielsweise mit einem konfokalen Mikroskop µsurf expert der Fa. Nanofocus, Oberhausen, erfolgen. Dazu wird ein Objektiv des Typs 800xs genutzt und ein Scan von 3 x 3 Bildern angefertigt. Die Auswertung erfolgt durch Verwendung der Auswertesoftware psoft analysis premium 7.4.8164 anhand der ungefilterten Oberfläche gemäß der DIN ISO 25178. Die Rdq - Werte werden gem. DIN ISO 4287 ermittelt.

Bevorzugte erfindungsgemäße Verbundkörper sind solche, die eine Gurley-Zahl von 200 bis 1700 sec, bevorzugt 250 bis 1200 sec und besonders bevorzugt von 300 bis 800 sec, eine Dicke von 100 bis 400 µm, bevorzugt 125 bis 200 µm und besonders bevorzugt von 130 bis 170 µm, eine mittlere Porenweite (vorzugsweise der äußersten Schicht) von 60 bis 140 , bevorzugt 75 bis 130 nm, und/oder, vorzugsweise und eine Oberflächenrauhigkeit Sdq, von kleiner 10 µm, besonders bevorzugt von weniger als 8 µm aufweisen, wobei solche Verbundkörper besonders bevorzugt sind die, die alle der jeweils bevorzugtesten Parameter aufweisen.

In dem erfindungsgemäßen Verbundkörper ist das Substrat vorzugsweise ein Vlies, Gewirke oder Gelege, bevorzugt ein Vlies oder Gelege, besonders bevorzugt ein Vlies. Die Fasern weisen vorzugsweise eine Dimension von 1 bis 200 g/km Faser auf. Bevorzugt sind die Fasern aus Polyacrylnitril, Polyamid, Polyester und/oder Polyolefin, bevorzugt aus Polyacrylnitril. Besonders bevorzugt weisen die Fasern eine Dimension von 10 bis 80 g/km Faser und ganz besonders bevorzugt weisen die Fasern eine Dimension von 50 g/km Faser auf und sind aus Polyacrylnitril, Polyamid, Polyester und/oder Polyolefin, bevorzugt aus Polyester, insbesondere Polyethylentherephthalat.

Das Substrat weist vorzugsweise eine Dicke von 50 bis 150 µm, bevorzugt 100 bis 130 µm auf. Bevorzugt weist das Substrat ein Flächengewicht von 40 bis 150 g/m², bevorzugt 50 bis 120 g/m², bevorzugt 50 bis 100 g/m² und ganz besonders bevorzugt 60 g/m² aufweist. Besonders bevorzugt weist das Substrat eine Dicke von 50 bis 150 µm, bevorzugt von 100 bis 130 µm und ein Flächengewicht von 40 bis 150 g/m², bevorzugt 50 bis 120 g/m², bevorzugt 50 bis 100 g/m² und ganz besonders bevorzugt 60 g/m² auf.

Besonders bevorzugte Substrate sind solche, die alle der genannten Parameter aufweisen, ganz besonders bevorzugt solche, die jeweils die bevorzugtesten der genannten Parameter aufweisen.

Es kann vorteilhaft sein, wenn bei dem erfindungsgemäßen Verbundkörper auf oder oberhalb der Schicht (2) eine Polymerschicht (PS) vorhanden ist, die bevorzugt eine Gastrennschicht ist. Vorzugsweise enthält die Polymerschicht ein oder mehrere perfluorierte Polymere oder besteht vorzugsweise daraus, wobei unter Polymeren auch Copolymeren verstanden werden. Bevorzugt besteht die Polymerschicht aus einem perfluorierten Polymeren, welches vorzugsweise ein Verhältnis von Fluoratomen zu Kohlenstoffatomen von 2 zu 1 bis 1 zu 2, bevorzugt von 2 zu 1 bis 4 zu 3 aufweist. Als perfluorierte Polymere können alle entsprechenden Polymere vorhanden sein. Vorzugsweise sind amorphe perfluorierte Polymere vorhanden. Bevorzugt ist als perfluoriertes Polymer Poly[4,5-difluoro-2,2-bis(trifluoromethyl)-1,3-dioxol-co-tetrafluorethylen] mit 60 bis 90 mol% Dioxol bevorzugt 87 mol-% Dioxol, erhältlich von DuPont als TEFLON^{®} AF 2400, Poly[4,5-difluoro-2,2-bis(trifluoromethyl)-1,3-dioxol-co-tetrafluoroethylen] mit 50 bis 80 mol-% dioxol, bevorzugt 65 mol-% dioxol, erhältlich von DuPont als TEFLON^{®} AF 1600, ein perfluoriertes Polymer aus der CYTOP^{®} Serie der AGC Chemicals Company, oder amorphes Poly(tetrafluoroethylen-co-2,2,4-trifluoro-5-trifluoromethoxy-1,3-dioxol), vorzugsweise mit einem Anteil an Etherfunktionalitäten von 30 bis 90 mol-%, bevorzugt 40, 60 oder 80 mol-%, z. B. erhältlich von Solvay als HYFLON^{®} AD 60 oder HYFLON^{®} AD 40H. Die Polymerschicht (PS) weist vorzugsweise eine Dicke von 0,05 µm bis 10 µm, bevorzugt von 0,1 µm bis 1,5 µm, besonders bevorzugt 0,1 bis 1,0 µm, auf.

Es kann des Weiteren vorteilhaft sein, wenn zwischen der Schicht (2) und der Polymerschicht (PS) und/oder auf der Polymerschicht (PS) eine weitere Polymerbeschichtung (PB) vorhanden ist, die aus gummiartigen Polymeren, bevorzugt Silikonen, gebildet wird. Als gummiartige Polymere sind insbesondere solche geeignet, die eine hohe intrinsische Gaspermeabilität von >200 barrer (cm3 unter Normbedingungen/cm*sec*cmHg) für CO2 aufweisen. Bevorzugte gummiartige Polymere sind Silikonpolymere (Silikone) wie z. B. Polydimethylsilikon, Polyethyl-methylsilikon, Nitrilsilikon, Kautschuke, Poly(4-methyl-1-penten), Polytrimethylsilylpropene oder auch entsprechende Copolymere. Die Polymerbeschichtung (PB) weist vorzugsweise eine Dicke von 0,05 µm bis 10 µm, bevorzugt von 3 µm bis 8 µm, wenn es sich um eine Polymerbeschichtung handelt, die zwischen der Schicht (2) und der Polymerschicht vorhanden ist, und bevorzugt von 1 bis 4 µm wenn es sich um eine Polymerbeschichtung (PB) handelt, die auf der Polymerschicht (PS) vorhanden ist, auf.

Die erfindungsgemäßen Verbundkörper zeichnen sich durch eine gute Stabilität bei der Handhabung aus. Dies reduziert die Wahrscheinlichkeit des Auftretens von Fehlern/Beschädigungen im Verbundkörper, die z. B. während des Einbringens in eine Apparatur zur Trennung von Gasgemischen auftreten können. Typische Fehler/Beschädigungen wären Brüche in der Keramik aufgrund von Knicken oder der Behandlung mit spitzen Gegenständen.

Die erfindungsgemäßen Verbundkörper sind vorzugsweise flexibel. Flexibel bedeutet im Rahmen der vorliegenden Erfindung, dass sie ohne Beschädigung um einen Stab oder um ein Rohr mit einem Durchmesser von bis herab zu 15 mm gewickelt werden können. Besonders bevorzugte erfindungsgemäße Verbundkörper können um einen Stab oder um ein Rohr mit einem minimalen Durchmesser von bis herab zu 5 mm ohne Beschädigung gewickelt werden. Die Beschädigungsfreiheit der entsprechenden Verbundkörper kann leicht durch die Bestimmung des Gasflusses von Stickstoff nachgewiesen werden. Hierbei wird eine Erhöhung des Gasflusses bestimmt mit Stickstoff um mehr als 100 % als Fehler/Beschädigung im Verbundkörper gewertet. Durch die Flexibilität der erfindungsgemäßen Verbundkörper sind diese sehr einfach in typischen Modulformen für Flachmembranen einbringbar und eignen sich insbesondere zur Verwendung in Spiral-Wickel-Modulen, Plate oder Frame Modulen, Taschenmodulen und andere Apparaturen, die für Flachmembranen entworfen wurden.

Durch die teilweise keramische Struktur der erfindungsgemäßen Verbundkörper haben diese außerdem den Vorteil, dass sich bei einer Druckbeaufschlagung ihre Dicke und/oder Porosität vorzugsweise wenig, bevorzugt nahezu gar nicht, verändert. Dies hat den Vorteil, dass der gesamte Verbundkörper auch bei hoher Druckbeaufschlagung eine nahezu konstante Flussleistung in GPU zulässt und der Fluss nicht bei höheren Drücken durch eine sich verdichtende poröse Struktur reduziert wird. Zur Bestimmung der Änderungen von Dicke und/oder Porosität kann eine kreisrunde Probe mit einem Durchmesser von 35 mm aus einem erfindungsgemäßen Verbundkörper ausgeschnitten und in einer hydraulischen Presse unter gleichzeitiger Bestimmung der Dicke mit einem Druck von bis zu 52 bar beaufschlagt werden (Messgerät der Firma INSTRON). Aus einem Diagramm in dem die Dicke als Funktion des Pressendrucks aufgetragen ist, kann nach drei Zyklen aus Druckbeaufschlagung und Entspannung ein elastischer Teil der Dickenänderung errechnet werden. Dieser liegt für erfindungsgemäße Verbundkörper vorzugsweise bei kleiner 8 %, bevorzugt kleiner 7 %.

Die erfindungsgemäßen Verbundkörper können auf unterschiedliche Weise hergestellt werden, vorzugsweise werden die erfindungsgemäßen Verbundkörper durch das nachfolgend beschriebene erfindungsgemäße Verfahren erhalten.

Das erfindungsgemäße Verfahren zur Herstellung eines Verbundkörpers, bevorzugt eines erfindungsgemäßen Verbundkörpers zeichnet sich dadurch aus, dass es die folgenden Schritte aufweist:
(a) Aufbringen einer Beschichtungsmasse (BM1) auf und in ein Substrat, welches Fasern und Zwischenräume zwischen den Fasern aufweist, wobei die Beschichtungsmasse hergestellt wird durch Vereinen
   (a1) einer Dispersion (D1) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO₂ und SiO₂, besonders bevorzugt ausgewählt aus den Oxiden der Elemente AI und Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
   (a2) einer Dispersion (D2) von Oxidpartikeln, hergestellt durch Mischen von Oxidpartikeln, ausgewählt aus den Oxiden der Elemente Ti, Al, Zr und/oder Si, bevorzugt ausgewählt aus den Oxiden der Elemente AI und Si, die einen mittleren Partikeldurchmesser (d50) von 15 bis 150 nm, vorzugsweise 40 bis 60 nm aufweisen, mit Wasser,
   (a3) einer Binderformulierung (BF1), hergestellt durch Mischen von mindestens zwei organofunktionellen Silanen mit einem Alkanol, vorzugsweise Ethanol, einer anorganischen Säure, vorzugsweise Borsäure, und Wasser,
(b) Verfestigen der Beschichtungsmasse (BM1) bei einer Temperatur von 100 °C bis 275 °C, vorzugsweise 120 bis 240 °C, um eine erste Schicht (S1') zu schaffen,
(c) optional Aufbringen einer Beschichtungsmasse (BM2) auf mindestens die Schicht (S1'), wobei die Beschichtungsmasse (BM2) hergestellt wird durch Vereinen
   (c1) einer Dispersion (D3) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO₂ und SiO₂, besonders bevorzugt ausgewählt aus den Oxiden der Elemente AI und Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
   (c2) einer Dispersion (D4) von Oxidpartikeln, hergestellt durch Mischen von Oxidpartikeln, ausgewählt aus den Oxiden der Elemente Ti, Al, Zr und/oder Si, bevorzugt ausgewählt aus Al₂O₃, ZrO₂, TiO₂ und SiO₂, besonders bevorzugt ausgewählt aus den Oxiden der Elemente AI und Si, die einen mittleren Partikeldurchmesser (d50) von 15 bis 150 nm, bevorzugt 40 bis 60 nm aufweisen, mit Wasser,
   (c3) einer Binderformulierung (BF2), hergestellt durch Mischen von mindestens zwei organofunktionellen Silanen mit einem Alkanol, vorzugsweise Ethanol, einer anorganischen Säure, vorzugsweise Borsäure, und Wasser,
(d) optional Verfestigen der Beschichtungsmasse (BM2) bei einer Temperatur von 100 °C bis 275 °C, vorzugsweise 120 bis 240 °C, um eine zweite Schicht (S2`) zu schaffen,
(e) Aufbringen einer Beschichtungsmasse (BM3) auf die Schicht (S1') oder, falls vorhanden, die Schicht (S2`), wobei die Beschichtungsmasse (BM3) hergestellt wurde durch Vereinigen von Wasser und einer anorganischen Säure mit einer
   (e1) Oxidpartikel, ausgewählt aus den Oxiden der Elemente Ti, Al, Zr und/oder Si, bevorzugt ausgewählt aus Al₂O₃, ZrO₂, TiO₂ und SiO₂, besonders bevorzugt ausgewählt aus den Oxiden der Elemente Al und Si, die einen mittleren Partikeldurchmesser (d50) von 25 bis 100 nm, bevorzugt 40 bis 60 nm, aufweisen, aufweisenden wässrigen Dispersion (D5), sowie mit Ethanol und mit einer
   (e2) Binderformulierung (BF3), die mindestens zwei organofunktionelle Silane umfasst,
(f) Verfestigen der Beschichtungsmasse bei einer Temperatur von 100 °C bis 275 °C, vorzugsweise 120 bis 240 °C um eine Schicht (S3') zu schaffen,
(g) optional Aufbringen einer Beschichtungsmasse (BM4) auf die Schicht (S3'), wobei die Beschichtungsmasse (BM4) hergestellt wurde durch Vereinigen von Wasser und einer anorganischen Säure mit einer
   (g1) Oxidpartikel, ausgewählt aus den Oxiden der Elemente Ti, Al, Zr und/oder Si, bevorzugt ausgewählt aus den Oxiden der Elemente Al und Si, die einen mittleren Partikeldurchmesser von 15 bis 150 nm, bevorzugt 40 bis 60 nm aufweisen, aufweisenden wässrigen Dispersion (D6), sowie mit Ethanol und mit einer
   (g2) Binderformulierung (BF4), die mindestens zwei organofunktionelle Silane umfasst,
(h) optional Verfestigen der Beschichtungsmasse bei einer Temperatur von 100 °C bis 275 °C, vorzugsweise 120 bis 240 °C, um eine Schicht (S4') zu erhalten.

Ganz besonders bevorzugt eingesetzte Oxidpartikel mit einer mittleren Partikeldurchmesser (d₅₀) von 15 bis 150 nm, bevorzugt 40 bis 60 nm basieren auf SiOz oder daraus bestehen. Entsprechende Partikel sind z.B. unter der Bezeichnung Aerosil^{®} Ox50 bei der Evonik Resource Efficiency GmbH erhältlich.

Bei der Herstellung der Binderformulierungen BF1 bis BF2 wird vorzugsweise so viel Säure eingesetzt, dass der pH-Wert von 2 bis 5 beträgt. Bei der Herstellung der Beschichtungsmassen BM1 bis BM4 wird vorzugsweise so viel an Säure eingesetzt, dass der pH-Wert von 2,5 bis 5 beträgt. Wird zur Herstellung der Binderformulierung AMEO eingesetzt, beträgt der pH-Wert vorzugsweise größer 8, bevorzugt 8,5 bis 9,5. Insbesondere bei der Verwendung von AMEO in der Binderformulierung kann es vorteilhaft sein, einzelne Teilschritte der Herstellung der Binderformulierung so zusammenzufassen, dass die Einsatzstoffe der Binderformulierung ohne Zwischenschritte direkt in die Beschichtungsmasse eindosiert werden. Diese Vorgehensweise ist aber auch bei allen anderen Beschichtungsmassenformulierungen anwendbar.

Als Dispergierhilfsmittel können alle geeigneten Dispergierhilfsmittel eingesetzt werden. Vorzugsweise werden Dispergierhilfsmittel eingesetzt, die unter dem Namen DOLAPIX von der Zschimmer & Schwarz GmbH & Co KG oder die unter dem Namen TEGO^{®} Dispers von der Evonik Resource Efficiency GmbH vertrieben werden. Besonders bevorzugt wird als Dispergierhilfsmittel eine Carbonsäurezubereitung eingesetzt, wie sie z. B. unter der Bezeichnung DOLAPIX CE 64 von der Zschimmer & Schwarz GmbH & Co KG vertrieben wird.

Es kann vorteilhaft sein und kann deshalb bevorzugt sein, in dem erfindungsgemäßen Verfahren die optionalen Schritte (c) und (d) und/oder (g) und (h) durchzuführen, da auf diese Weise einfacher und sicherer Verbundkörper erhalten werden können, die eine geringe Oberflächenrauhigkeit, bevorzugt eine Oberflächenrauhigkeit Sdq, von kleiner 10 µm, besonders bevorzugt von kleiner 8 µm aufweisen. Besonders bevorzugt werden deshalb sowohl die Schritte (c) und (d) als auch die Schritte (g) und (h) durchgeführt. Auf diese Weise kann außerdem sichergestellt werden, dass Fehlstellen im Verbundkörper, also Stellen an denen z.B. die mittlere Porenweite, die Gurleyzahl, die Dicke und/oder die Oberflächenrauhigkeit deutlich von den beanspruchten bzw. als bevorzugt beschriebenen Werten abweicht, vermieden werden.

Als organofunktionelle Silane, vorzugsweise alkoxyfunktionelle Silane, besonders bevorzugt methoxy- und/oder ethoxyfunktionelle Silane, werden vorzugsweise 3-Glycidyloxytriethoxysilan, Methytriethoxysilan, Octyltriethoxysilan, Aminopropyltrieethoxysilan und/oder Tetraethoxysilane eingesetzt. Bevorzugt werden als organofunktionelle Silane 3-Glycidyloxytriethoxysilan, Methytriethoxysilan und Tetraethoxysilan eingesetzt. In Binderformulierung (BF1) und/oder (BF2), vorzugsweise und (BF2), wird 3-Glycidyloxytriethoxysilan, Methytriethoxysilan und Tetraethoxysilan in einem Massenverhältnis von 2 bis 4 zu 0,5 bis 1,5 zu 1, besonders bevorzugt von 2,5 bis 3,5 zu 0,75 bis 1,25 zu 1, ganz besonders bevorzugt 3 zu 1 zu 1 eingesetzt. In Binderformulierung (BF3) und/oder (BF4), vorzugsweise und (BF4), wird 3-Glycidyloxytriethoxysilan, Methytriethoxysilan und Tetraethoxysilan in einem Massenverhältnis von 0,5 bis 1,5 zu 1,5 bis 2,5 zu 1, besonders bevorzugt von 0,75 bis 1,25 zu 1,75 bis 2,25 zu 1, ganz besonders bevorzugt 1 zu 2 zu 1 eingesetzt.

Es kann vorteilhaft sein, wenn die Beschichtungsmassen (BM3) und (BM4) identisch zusammengesetzt sind. Es kann ebenfalls vorteilhaft sein, wenn die Beschichtungsmassen (BM1) und (BM2) identisch zusammengesetzt sind. Auf diese Weise können einheitlich aufgebaute Schichten (1) bzw. (2) durch Herstellen der Schichten (S1') und (S2`) bzw. (S3`) und (S4`) erhalten werden. Auch dies kann dazu beitragen, die Anzahl von Fehlstellen im Verbundkörper zu vermeiden.

Als Substrat wird in dem erfindungsgemäßen Verfahren vorzugsweise ein Polymervlies eingesetzt, das Fasern ausgewählt aus Polyacrylnitril, Polyester, Polyamid und/oder Polyolefin, bevorzugt aus Polyester, besonders bevorzugt Polyethylentherephthalat aufweist. Bevorzugt eingesetzte Substrate weisen vorzugsweise die oben genannten Parameter, insbesondere die dort als bevorzugt genannten Parameter auf.

Das Verfestigen der Beschichtungsmassen kann z.B. durch Durchlaufen eines Heißluft-Ofens, eines IR-Ofens oder eines sonstigen Ofens erfolgen. Bevorzugt erfolgt das Verfestigen der Beschichtungsmassen BM1 bis BM4 bei einer Temperatur von 100 bis 275 °C, besonders bevorzugt bei einer Temperatur von 120 bis 240 °C.

Es kann vorteilhaft sein, wenn nach Schritt (f) oder, falls vorhanden, nach Schritt (h) eine weiterer Schritt (i) durchgeführt wird, bei dem auf die Schicht (S3`) oder, falls vorhanden, auf die Schicht (S4`) ein perfluoriertes Polymer, bevorzugt eine Polymerschicht, die ein perfluoriertes Polymer enthält oder daraus besteht, aufgebracht wird. Vorzugsweise enthält die Polymerschicht ein amorphes perfluoriertes Polymer oder besteht daraus, wobei unter Polymeren auch Copolymeren verstanden werden. Bevorzugt werden perfluorierte Polymere eingesetzt, welche vorzugsweise ein Verhältnis von Fluoratomen zu Kohlenstoffatomen von 2 zu 1 bis 1 zu 2, bevorzugt von 2 zu 1 bis 4 zu 3 aufweisen. Als perfluoriertes Polymere können alle entsprechenden Polymere eingesetzt werden. Vorzugsweise wird als perfluoriertes Polymer Poly[4,5-difluoro-2,2-bis(trifluoromethyl)-1,3-dioxol-co-tetrafluorethylen] mit 60 bis 90 mol-% Dioxol bevorzugt 87 mol-% Dioxol, erhältlich von DuPont als TEFLON^{®} AF 2400, Poly[4,5-difluoro-2,2-bis(trifluoromethyl)-1,3-dioxol-co-tetrafluoroethylen] mit 50 bis 80 mol-% Dioxol, bevorzugt 65 mol-% Dioxol, erhältlich von DuPont als TEFLON^{®} AF 1600, ein perfluoriertes Polymer aus der CYTOP^{®} Serie der AGC Chemicals Company, oder amorphes Poly(tetrafluoroethylen-co-2,2,4-trifluoro-5-trifluoromethoxy-1,3-dioxol), vorzugsweise mit einem Anteil an Etherfunktionalitäten von 30 bis 90 mol-%, bevorzugt 40, 60 oder 80 mol-%, z. B. erhältlich von Solvay als HYFLON^{®} AD 60 oder HYFLON^{®} AD 40H eingesetzt.

Das Aufbringen der Polymerschicht, die ein perfluoriertes Polymer enthält oder daraus besteht, kann durch ein oder mehrmaliges Auftragen und Verfestigen einer entsprechenden Polymerlösung erfolgen. Vorzugsweise wird auf die Schicht (S3`) oder, falls vorhanden, bevorzugt auf die Schicht (S4`) eine Lösung des perfluorierten Polymers aufgebracht. Das Aufbringen kann z.B. durch Tauchen (Dip Coating), Aufdrucken, Aufrakeln oder Aufsprühen erfolgen. Bevorzugt erfolgt das Aufbringen durch DipCoating. Der Anteil des perfluorierten Polymers an der Lösung beträgt vorzugsweise 0,5 bis 10 Gew.-%, bevorzugt 1,5 bis 3,5 Gew.-%, besonders bevorzugt 2,5 Gew.-%.

Als Lösemittel können z.B. fluorierte Ether oder Amine eingesetzt werden. Vorzugsweise weisen die eingesetzten Lösemittel einen Siedepunkt von 25 bis 250 °C. Als Lösemittel werden vorzugsweise solche Lösemittel aus der Cytop Reihe, z.B. ct-100-solv oder ct-180-solv von Asahi Glass Chem. (https://www.agc-chemicals.com/jp/en/fluorine/products/detail/index.html?pCode=JP-EN-F019), verschiedene Galden Typen, wie z.B. Galden D02TS oder Galden HT55 von Solvay oder aber auch Novec Typen von 3M oder ähnliche Lösemittel eingesetzt. Bevorzugt sind die eingesetzten Lösemittel ausgewählt aus Cytop ct 100 solv, Cytop ct 180 solv, Galden HT55, Novec 7300, ganz besonders bevorzugt Cytop ct 100 solv oder Novec 7300.

Das Verfestigen erfolgt vorzugsweise durch Trocknen bei einer Temperatur von 25 bis 250 °C, bevorzugt von 50 bis 225 °C und kann z.B. in einem Ofen, Heißluft-Ofen oder Infrarot-Ofen erfolgen. Das Aufbringen erfolgt vorzugsweise so oft, dass eine Polymerschicht mit einer Dicke von 0,05 µm bis 10 µm erhalten wird.

Es kann vorteilhaft sein, wenn vor und/oder nach dem Aufbringen der ein perfluoriertes Polymer aufweisenden Polymerschicht, eine Beschichtung aufgebracht wird, die gummiartige Polymere, bevorzugt Silikone enthält oder daraus besteht. Als gummiartige Polymere sind insbesondere solche geeignet, die eine hohe intrinsische Gaspermeabilität von >200 barrer (cm³ unter Normbedingungen/cm*sec*cmHg) für COz aufweisen. Bevorzugte gummiartige Polymere sind Silikonpolymere (Silikone) wie z. B. Polydimethylsilikon, Polyethyl-methylsilikon, Nitrilsilikon, Kautschuke, Poly(4-methyl-1-penten), Polytrimethylsilylpropene oder auch entsprechende Copolymere.

Diese Polymerbeschichtung kann z.B. dadurch hergestellt werden, dass eine Lösung des gummiartigen Polymers, bevorzugt eines Silikonpolymers auf die Schicht (S3`) oder falls vorhanden (S4`) und/oder auf die Polymerschicht aufgebracht wird. Die Lösung weist vorzugsweise 3 bis 10 Gew.-% des Polymers auf. Als Lösemittel eignen sich im Falle der Nutzung von Silikonen insbesondere Siloxanverbindungen, bevorzugt Hexamethyldisiloxan, aber auch Toluol oder isoOctan sind nutzbar. Wird Silikon als Polymer eingesetzt, werden bevorzugt Mehrkomponenten-Systeme genutzt, die z.B. von Momentive, Panacol oder Evonik Hanse Chemie GmbH bezogen werden können. So kann z. B, das Silikon RTV-615 der Firma Momentive eingesetzt werden. Besonders bevorzugt wird jeweils eine Silikonbeschichtung vor und nach dem Aufbringen der Polymerschicht aufgebracht. Dabei ist es bevorzugt, wenn die Silikonbeschichtung, die auf die Schicht (S3`) oder falls vorhanden (S4`) aufgebracht wird, durch Aufbringen einer Silikonformulierung, die 5 bis 10 Gew.-%, bevorzugt 3 bis 7 Gew.-% Silikon, bevorzugt RTV-615 der Fa. Momentive oder eine additionsvernetzende Silikon-Formulierung der Fa. Evonik Hanse Chemie GmbH, in Hexamethyldisiloxan als Lösemittel enthält erzeugt wird.

Eine typische Formulierung von additionsvernetzenden Silikonen der Evonik Hanse GmbH, besteht aus Lösung A und Lösung B in variabler Zusammensetzung, die je nach Anforderungen im Verhältnis 1:10 bis 10:1 zusammengegeben werden können. Dabei enthält Lösung A einen Platinkatalysator (Platin-Siloxankomplex), und kann weiterhin variable Mengenanteile von vinylfunktionellem Polydimethylsiloxan mit gewünschtem Molekulargewicht und gewünschtem Gehalt an Vinylgruppen, vinylfunktionellem QM-Harz in gewünschtem Molekulargewicht und Silica-Partikeln enthalten. Lösung B enthält SiH-haltiges Polydimethylsiloxan (Crosslinker) mit gewünschtem Molekulargewicht und gewünschtem Gehalt an SiH-Gruppen sowie 0,02 Gew.-% eines Inhibitors (z.B. Alkinole, Divinyltetramethyldisiloxan, Methylvinylcyclotetrasiloxan), und kann weiterhin variable Mengenanteile von vinylfunktionellem Polydimethylsiloxan mit gewünschtem Molekulargewicht und gewünschtem Gehalt an Vinylgruppen, vinylfunktionellem QM-Harz in gewünschtem Molekulargewicht und Silica-Partikeln enthalten.

Die Silikonformulierung, die nach der Polymerbeschichtung aufgebracht wird, kann auch ein feuchtigkeitsvernetzendes oder ein durch Strahlung, wie z.B. UV-Strahlung, vernetzbares Silikonsystem wie z.B. die RC-Silikon-Typen der Fa. Evonik Resource Efficiency GmbH sein. Gut geeignete Polymerformulierungen enthalten vorzugsweise 3 bis 7 Gew.-% vernetzbares Silikon in für das jeweilige Silikon geeigneten Lösemitteln.

Das Trocknen der Beschichtung, die gummiartige Polymere, bevorzugt Silikone enthält oder daraus besteht, erfolgt vorzugsweise für 1 bis 30 Minuten bei 50 bis 150 °C.

Bei der Herstellung der Lösung der gummiartigen Polymere werden die Polymere und die Lösungskonzentration, aber auch die Zeit zur Mischung der Polymerkomponenten im Lösemittel, vorzugsweise so ausgewählt, dass die Mischung nur geringfügig und bevorzugt gar nicht in die Porenstruktur des Verbundkörpers eindringt. Dies kann der Fachmann durch einfache Vorversuche ermitteln.

Es kann vorteilhaft sein, vor dem jeweiligen Aufbringen einer Polymerschicht oder gummiartigen Polymerbeschichtung die Schicht/Struktur, auf welche die Schicht oder Beschichtung aufgebracht werden soll, mit einem Plasma, vorzugsweise einer Corona (Luftplasma) zu behandeln. Dabei wird vorzugsweise eine Leistung von 50 bis 900, bevorzugt 100 bis 300 W min/m² bei der Behandlung der Beschichtung, die gummiartige Polymere aufweist, bevorzugt 300 bis 900 W min/m² bei der Behandlung der keramischen (also Oxidpartikel enthaltenen) Schichten, bevorzugt 200 bis 400 W min/m² bei der Behandlung der perfluorierte Polymere aufweisenden Schichten eingestellt. Geeignete Geräte zur Corona Behandlung sind von der Fa. Softal, Hamburg erhältlich.

Das Verfahren zur Herstellung der erfindungsgemäßen Verbundkörper kann kontinuierlich oder diskontinuierlich durchgeführt werden. Vorzugsweise wird das Verfahren als Rolle zu Rolle Verfahren durchgeführt. Dabei werden vorzugsweise alle Schritte (a) bis (i) sowie ggf. die entsprechenden Unterschritte so durchgeführt, dass das Substrat oder das ein- oder mehrfach beschichtete Substrat von einer Rolle abgewickelt und durch eine Apparatur geführt wird, in der ein oder mehrere Schritte bzw. Unterschritte durchgeführt werden und nach dem Verfestigen der aufgebrachten Schicht(en) das ein oder mehrfach beschichtete Substrat bzw. der erfindungsgemäße Verbundkörper aufgerollt wird. Es kann vorteilhaft sein, wenn beim Aufrollen des Verbundkörpers eine Zwischenlage mit eingerollt wird, die ein Verkleben oder Beschädigen der Schicht (S1') bis (S4`) bzw. einer ggf. vorhandenen Polymerschicht verhindert. Als Zwischenlage eignen sich z.B. Polyethylentherephthalat-Vliese, z.B. solche wie sie auch als Substrat verwendet werden. Wird das erfindungsgemäße Verfahren als Rolle zu Rolle Verfahren durchgeführt, beträgt die Bahngeschwindigkeit vorzugsweise von 1 bis 500 mm/sec., bevorzugt 20 bis 50 mm/sec.

Mittels des erfindungsgemäßen Verfahrens können die erfindungsgemäßen Verbundkörper erhalten werden. Dem entsprechend sind Gastrennvorrichtungen ebenfalls Gegenstand der vorliegenden Erfindung, die einen erfindungsgemäßen Verbundkörper oder erfindungsgemäß hergestellten Verbundkörper enthalten.

Die erfindungsgemäßen Verbundkörper und/oder die erfindungsgemäße hergestellten Verbundkörper, insbesondere solche, die eine Schicht, die perfluorierte Polymere enthält oder daraus besteht, aufweist, können als Gastrennmembran, besonders bevorzugt zur Trennung von Methan von COz verwendet werden können. Bevorzugte, als Gastrennmembran verwendbare erfindungsgemäße Verbundkörper weisen Gasflüsse von > 50 GPU, bevorzugt von > 80 GPU und kleiner 200 GPU für Kohlendioxid als Reingas auf.

Die erfindungsgemäßen Verbundkörper können vorzugsweise in Apparaturen zur Gastrennung eingesetzt werden, da sie relativ hohe Reingasselektivitäten mit einem hohen Fluss für Kohlendioxid verbinden. Dies macht den Einsatz in Anlagen zur Trennung entsprechender Stoffgemische effizient und somit verbessert es die Wirtschaftlichkeit der entsprechenden Trennprozesse.

Die erfindungsgemäßen Gastrennmembranen können auch zur Trennung weiterer Gasgemische geeignet sein. Besonders bevorzugt werden die erfindungsgemäßen Verbundwerkstoffe zur Trennung von Methan von COz, H₂ von COz, H₂ von N₂, Oz von N₂ oder He von CH₄, besonders bevorzugt zur Trennung von CH₄ von COz, verwendet. In der nachfolgenden Tabelle A ist angegeben, welche Reingasselektivitäten für die jeweiligen Gasgemische erreicht werden können, je nach dem aus welchem perfluorierten Polymer die Schicht, die perfluorierte Polymere enthält oder daraus besteht, gebildet wurde.

**Tabelle A: Mit erfindungsgemäßen Gastrennmembranen erzielbare Reingasselektivitäten**

| Gaskomponenten | | Reingasselektivität Hyflon AD 60 | Reingasselektivität Cytop |
|---|---|---|---|
| Gas 1 | Gas 2 | Gas1/Gas2 | Gas1/Gas2 |
| CO₂ | CH₄ | 13 | 18 |
| CO₂ | N₂ | 6,5 | 3 |
| H₂ | CO₂ | 18 | 1,7 |
| H₂ | N₂ | 9 | 12 |
| O₂ | N₂ | 3 | 3 |
| He | CH₄ | 39 | 84 |

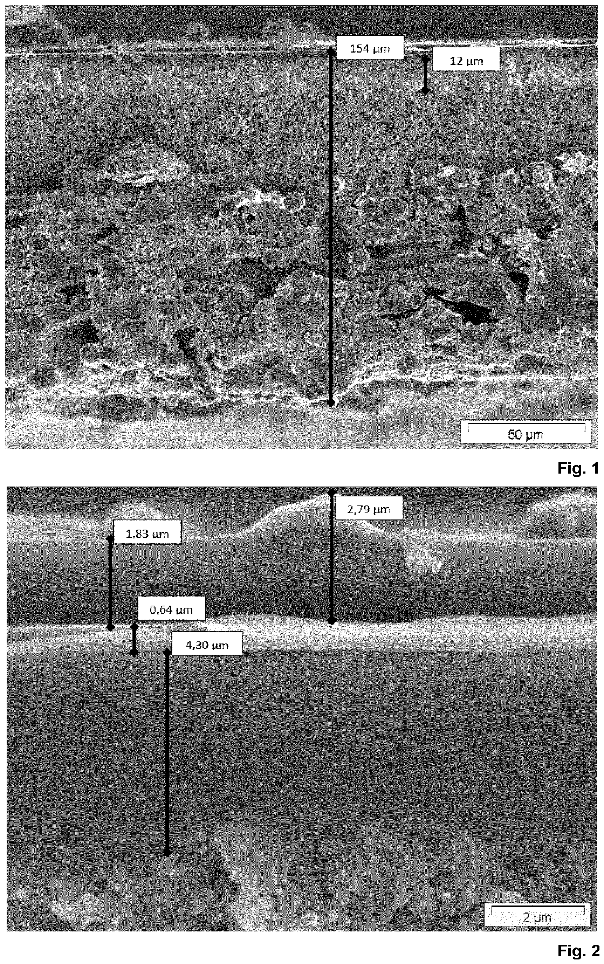

Die vorliegende Erfindung wird durch die in den Figuren Fig. 1 und Fig. 2 dargestellten Aufnahmen von einem erfindungsgemäßen Verbundkörper beispielhaft beschrieben, ohne darauf beschränkt zu sein.

Fig. 1 zeigt eine REM Aufnahme eines Schnitts durch den Verbundkörper P-VK-11 (siehe Beispiele). Es sind die verschiedenen Schichten (1) und (2), die Polymerschicht (PS)/Beschichtungen(PB) sowie die Fasern des Substrats erkennbar. Es sind außerdem Bemaßungen für den Verbundkörper sowie die Schicht (2) angegeben.

Fig. 2 zeigt eine vergrößerte REM Aufnahme eines Schnitts durch den Verbundkörper P-VK-11 (siehe Beispiele). Es ist der Aufbau der Polymerschicht (PS) inklusive Polymerbeschichtungen (PB) zu erkennen. Es sind außerdem Bemaßungen für Polymerbeschichtungen (PB) sowie die Polymerschicht (PS) angegeben.

Die vorliegende Erfindung wird durch die nachfolgenden Beispiele beschrieben, ohne darauf beschränkt zu sein.

### Beispiele

**Tabelle 1a: Einesetzte Rohstoffe**

| **Rohstoff** | **ggf. Markenname, Hersteller (in Klammern nachfolgend verwendete Abkürzung)** |
|---|---|
| Ethanol | |
| VE-Wasser | |
| Dispergiermittel | DOLAPIX^{®} CE 64, Zschimmer & Schwarz GmbH & Co. KG (CE 64) |
| Borsäure | |
| Salpetersäure (65 Gew.-%ig) | (HNO₃) |
| 3-Glycidyloxytrimethoxysilan | DYNASYLAN^{®} GLYMO, Evonik Resource Efficiency GmbH (GLYMO) |
| 3-Glycidyloxytriethoxysilan | DYNASYLAN^{®} GLYEO, Evonik Resource Efficiency GmbH (GLYEO) |
| Methytriethoxysilan | DYNASYLAN^{®} MTES, Evonik Resource Efficiency GmbH (MTES) |
| Tetraethoxysilan | DYNASYLAN^{®} TEOS, Evonik Resource Efficiency GmbH (TEOS) |
| Aluminiumoxid | CT1200 SG, Almatis GmbH |
| Aluminiumoxid | CT 3000 SG, Almatis GmbH |
| Siliziumdioxid | AEROSIL^{®} Ox 50, Evonik Resource Efficiency GmbH (Ox50) |
| Siliciumdioxid | AEROSIL^{®} 90, Evonik Resource Efficiency GmbH |
| Siliciumdioxid | AEROSIL^{®} 200, Evonik Resource Efficiency GmbH |
| Titandioxid | AEROXIDE^{®} TiO2 P 25, Evonik Resource Efficiency GmbH (P25) |
| Zirkonoxid, | Zirkonoxid 50nm, Sigma Aldrich |
| Kieselsol | LEVASIL^{®} CS40-316P, Obermeier GmbH |
| Aluminiumoxid | MARTOXID^{®} MZS-1, Martinswerk GmbH (MZS-1) |
| Aluminiumoxid | MARTOXID^{®} MZS-3, Martinswerk GmbH (MZS-3) |
| Aluminiumoxid | AEROXIDE^{®} Alu C, Evonik Resource Efficiency GmbH (Alu C) |
| Perfluoriertes Polymer | Cytop-ctl 109 AE, Asahi Glass Chem. |
| Perfluoriertes Polymer | Cytop-ctl 107 MK, Asahi Glass Chem. |
| Perfluoriertes Polymer | Hyflon AD60, Solvay |
| Lösemittel | Ct-100-solv, Asahi Glass Chem. |
| Lösemittel | Novec 7300, 3M |
| Lösemittel | Galden HT55, Solvay |
| 2-komponentiges Polymersilikon | RTV-615 (A+B), Momentive |

**Tabelle 1b: Einesetzte Substrat-Materialien:**

| Substrat | Formgebung | Material | Flächengewicht | Lieferant |
|---|---|---|---|---|
| 1 | Vlies 05-TH-60W | PET | 60 g/sqm | Sojitz, Düsseldorf |
| 2 | Vlies | Carbon | 15 g/sqm | Technical Fibre Products, Burnside Mills |
| 3 | Gewebe | E-Glas | 60 g/sqm | P&G |
| 4 | Monofilament-Gewebe | PET | 40 g/sqm | SEFAR |

### Beispiel 1: Herstellung eines erfindungsgemäßen Verbundwerkstoffs

### Beispiel 1a: Herstellung Binder-Formulierung I

In einem 250 mL Becherglas wurden zunächst 14,22 g Ethanol mit 2,84 g Borsäure vorgelegt und mit einem Magnetrührer miteinander verrührt. Sobald sich die Borsäure weitgehend aufgelöst hatte, konnten nacheinander 18,16 g GLYEO (entspricht 15,5 g GLYMO), 5,14 g TEOS und 5,14 g MTES zugegeben werden. (Für wechselnde Versuchsbeschreibungen müsste dieser Teil jeweils variiert werden.) Nachdem dieses gut miteinander vermischt vorlag, wurde eine Menge von 0,03 g Wasser zum Start der Hydrolyse zugegeben. Das Gemisch wurde 15 h lang auf einem Magnetrührer gerührt, bevor ein zweiter Wasseranteil von 7,1 g unter Rühren hinzugefügt wurde. Die so vorbereitete Silan-Binder-Formulierung wurde weitere 5 h bis zum Abklingen der "Vorhydrolyse" gerührt, bevor sie verwendet wurde.

### Beispiel 1b: Herstellung Partikel-Formulierung I

11 kg Wasser wurden in einen Hobbock gegeben. Unter Schwenken wurden 5 kg Ox50 zugegeben. Dieses Gemisch wurde für 1 h langsam gerührt. Um die Partikel weiter zu zerkleinern, wurde die Mischung für eine Dauer von 6 Stunden in einer Menge von 12 L/h durch eine Durchflussultraschallzelle UIP 1000 geleitet. Die Partikelgröße d₅₀ wurde wie in der Beschreibung angegeben zu < 60nm bestimmt. Der Feststoffgehalt betrug ca. 30 Massen-%.

### Beispiel 1c: Herstellung Beschichtungsmasse I

In ein 1000 mL Becherglas wurden nacheinander 97 g Wasser, 0,44g Dolapix CE64 und 1,84 g einer 65 Massen-%igen Salpetersäure Lösung gegeben und mit einem Magnetrührer miteinander vermischt. Zu dieser Mischung wurden portionsweise 200 g eines feinteiligen Aluminiumoxids (ct1200SG) unter ständigem Rühren gegeben.

Nachdem alle Komponenten eingewogen und gut miteinander vermischt vorlagen, wurde diese Dispersion mit einem Ultraschall-Dispergierfinger (Hielscher UP200) behandelt, um eventuell vorliegende Agglomerate zu zerstören. Zu dieser Dispersion wurden noch 42 g Ethanol gegeben, anschließend wurde dieses Gemisch mindestens für weitere 15 h gerührt. Nach Ablauf der 15 h wurden entweder 13,5 g einer 30 %igen OX50 Dispersion, hergestellt gemäß Beispiel 1b und 8,74 g Wasser, oder 4 g Aerosil Ox50 mit 18 g Wasser zugegeben. Anschließend wurden 52,6 g einer vorbereiteten Silan-Binder-Formulierung hinzugefügt und die gesamt Dispersion wurde erneut für mindestens 15 h rührend gealtert.

Die resultierende Beschichtungsmasse hat einen Feststoffgehalt von 58,7 % und kann in dieser Form für Beschichtungsversuche genutzt werden.

### Beispiel 1d: Herstellung Binder-Formulierung II

In einem 250 mL Becherglas wurden zunächst 10,45 g Ethanol mit 0,84 g Borsäure vorgelegt und mit einem Magnetrührer miteinander verrührt. Sobald sich die Borsäure weitgehend aufgelöst hatte, konnten nacheinander 5,89 g GLYEO, 5,0 g TEOS und 10 g MTES zugegeben werden. (Für wechselnde Versuchsbeschreibungen müsste dieser Teil jeweils variiert werden.) Nachdem dieses gut miteinander vermischt vorlag, wurde eine Menge von 0,03 g Wasser zum Start der Hydrolyse zugegeben. Das Gemisch wurde 1 h lang auf einem Magnetrührer gerührt, bevor weitere 5,19 g VE-Wasser unter Rühren hinzugefügt wurde. Die so vorbereitete Silan-Binder-Formulierung 11 wurde weitere 15 h gerührt, bevor sie verwendet wurde.

### Beispiel 1e: Herstellung Beschichtungsmasse II

In ein 1000 mL Becherglas wurden 101,35 g der Ox50-Disperion aus Beispiel 1b vorgelegt und dann nacheinander 299,88 g VE-Wasser und 3 g einer 65 Massen-%igen Salpetersäure Lösung zugegeben und mit einem Magnetrührer 15 Stunden gerührt.

Zu dieser Dispersion wurden 37,39 g der vorbereiteten (Silan-)Binder-Formulierung II sowie 150,4 g Ethanol zugegeben. Anschließend wurde dieses Gemisch für weitere 2 Tage gerührt.

Die resultierende Beschichtungsmasse II hat einen Feststoffgehalt an Ox50 von ca. 5,7 % und kann in dieser Form für die Beschichtungsversuche genutzt werden.

### Beispiel 1f: Beschichtungsprozess

Es wurde ein Streifen des zu beschichtenden Materials (Gewebes, Vlieses oder Gestrickes) mit 10 cm Breite und mit ca. 1 m Länge vorbereitet. Alternativ kann auch das Ergebnis einer Beschichtung, wie sie hier beschrieben wird, verwendet werden. In diesem Fall ist dann aber darauf zu achten, dass vorzugsweise immer die gleiche Seite in nachfolgenden Behandlungsschritten bearbeitet wird.

Eine automatisierte Filmziehvorrichtung der Fa. Zehntner wurde so modifiziert, dass diese mit einem Seilzugmechanismus die zu beschichtenden Bahnwaren mit einer vorgegebenen Geschwindigkeit von 42 mm/s senkrecht aus einer DipCoat Vorrichtung, in der eine Seite der Warenbahn über eine Walze umgelenkt wird und somit nicht mit der Beschichtungsdispersion in Kontakt kommt und die andere Seite der Warenbahn durch eine mit der Dispersion gefüllte Wanne gefördert wird, nach oben gezogen wird.

Zur Beschichtung wird die fertig gemischte Dispersion (Beschichtungsmasse I oder II) in eine Wanne gegeben, in der eine mit der Warenbahn umspannte Rolle läuft. Der Füllstand der Wanne wurde so eingestellt, dass die Rolle nur mit 45° ihres Umfangs in die Lösung eintaucht. Zur guten Führung der Warenbahn, und um ein Hinterlaufen der Warenbahn durch die Dispersion zu verhindern, betrug die Bahnspannung mehr als 0,1 N/cm Warenbahnbreite. Die Warenbahn wird mit einer Geschwindigkeit von 42 mm/s bei Raumtemperatur und Normaldruck durch die Dispersion geführt.

Nach Abschluss der Beschichtung verblieb die Warenbahn noch 30 Minuten an einem gut gelüfteten Ort in senkrecht hängender Form und wurde erst danach in einem Trockenschrank auf einem Gitterrost liegend, bei 120 °C eine Stunde lang getrocknet und verfestigt.

Die getrocknete Warenbahn wird entweder erneut beschichtet oder der fertige Verbundkörper kann anschließend durch Schneiden oder Stanzen für die jeweiligen Test oder Verwendungen zugeschnitten werden.

Zur Herstellung des erfindungsgemäßen Verbundwerkstoffs wurde nacheinander zweimal mit einer Beschichtungsmasse I und zweimal mit einer Beschichtungsmasse II beschichtet. Die in einem Beispiel verwendeten Beschichtungsmassen I bzw. II konnten gleich oder unterschiedlich sein. Zur Ermittlung der am besten geeigneten Einsatzstoffe (Substrat, Beschichtungsmasse, Partikelformulierung, Binderformulierung etc.) wurde in Vorversuchen gegebenenfalls auch nur ein- oder mehrmals nur mit der Beschichtungsmasse I beschichtet. In den entsprechenden Tabellen ist die Anzahl der Beschichtungsvorgänge jeweils angegeben.

Die Versuche gemäß Beispiel 1 wurden analog unter Verwendung unterschiedlicher Partikel-Formulierungen, unterschiedlichen Beschichtungsmassen I bzw. II, unterschiedlichen Binder-Mischungen I bzw. II und unterschiedlichen Prozessparameter durchgeführt. Den Tabellen 2a bis 2l können die eingesetzten Rohstoffe und Mengen bzw. die jeweils eingesetzten Prozessparameter entnommen werden.

**Tabelle 2a: Für die Herstellung der Binder-Formulierung I (BF-I) eingesetzte Rohstoffe und Mengen sowie variierte Verfahrensparameter**

| BF-I | Ethanol [g] | Borsäure [g] | MTES [g] | TEOS [g] | GLYEO [g] | Wasser [g] | Summe [g] |
|---|---|---|---|---|---|---|---|
| BF-I-a | 14,22 | 2,84 | 5,14 | 5,14 | 18,16 | 0,03 | 52,6 |
| | | | | | | 7,1 | |
| BF-I-b | 14,22 | 2,84 | 10,28 | 5,14 | 6,01 | 0,03 | 45,6 |
| | | | | | | 7,1 | |

**Tabelle 2b: Für die Herstellung der Partikel-Formulierungen (PF) in den jeweiligen Beispielen eingesetzte Rohstoffe und Mengen**

| PF | Partikel-Typ | Wasser [g] | Dolapix CE64 [g] | HNO3 (65%) [g] | Partikel [g] | Ethanol [g] | PF-0 [g] | Wasser [g] | Summe [g] |
|---|---|---|---|---|---|---|---|---|---|
| PF-0 | Ox 50 | 11.000 | | | 5.000 | | | | 16.000 |
| PF-I-a | CT 1200 SG | 96,8 | 0,44 | 1,84 | 200 | 41,4 | 13,62 | 8,74 | 362,8 |
| PF-I-b | CT 3000 SG | 96,8 | 0,44 | 1,84 | 200 | 41,4 | 13,62 | 8,74 | 362,8 |
| PF-I-c | MZS-1 | 193,6 | 0,88 | 3,68 | 400 | 82,8 | 27,24 | 17.48 | 725,6 |
| PF-I-d | MZS-3 | 193,6 | 0,88 | 3,68 | 400 | 82,8 | 27,24 | 17.48 | 725,6 |
| PF-I-e | MZS-1 | 193,6 | 0,88 | 3,68 | 200 | 82,8 | 27,24 | 17.48 | 725,6 |
| | MZS-3 | | | | 200 | | | | |

**Tabelle 2c: Für die Herstellung der Beschichtungsmasse I (BM-I) in den jeweiligen Beispielen eingesetzte Rohstoffe und Mengen**

| BM-I | PF-I | Einwaage PF-I [g] | BF-I | Einwaage BF-I [g] |
|---|---|---|---|---|
| BM-I-a | PF-I-a | 362,8 | BF-I-a | 52,6 |
| BM-I-b | PF-I-a | 362,8 | BF-I-b | 45,6 |
| BM-I-c | PF-I-b | 362,8 | BF-I-a | 52,9 |
| BM-I-d | PF-I-c | 725,6 | BF-I-a | 105,3 |
| BM-I-e | PF-I-d | 725,6 | BF-I-a | 105,3 |
| BM-I-f | PF-I-e | 725,6 | BF-I-a | 105,3 |

**Tabelle 2d: Für die Herstellung der Partikel-Formulierungen II (PF-II) in den jeweiligen Beispielen eingesetzte Rohstoffe und Mengen**

| PF-II | Partikeltyp | Wasser [g] | PF-0 [g] | HNO3 (65%) [g] | Partikel [g] | Summe [g] |
|---|---|---|---|---|---|---|
| PF-0 | Ox 50 | 11.000 | | | 5.000 | 16.000 |
| PF-II-a | Ox 50 | 299,9 | 101,4 | 3 | | 403 |
| PF-II-b | Alu C | 371,2 | | 3 | 30 | 404 |
| PF-II-c | Aerosil 90 | 371,2 | | 3 | 30 | 404 |
| PF-II-d | Aerosil 200 | 371,2 | | 3 | 30 | 404 |
| PF-II-e | P25 | 371,2 | | 3 | 30 | 404 |
| PF-II-f | Zirkonoxid | 371,2 | | 3 | 30 | 404 |
| PF-II-g | Levasil 30 | 301,2 | | 3 | 100 | 404 |

**Tabelle 2e: Für die Herstellung der Binder-Formulierung II (BF-II) in den jeweiligen Beispielen eingesetzte Rohstoffe und Mengen und ggf. variierte Parameter**

| BF-II | Ethanol [g] | Borsäure [g] | MTES [g] | TEOS [g] | GLYEO [g] | Wasser [g] | Summe [g] |
|---|---|---|---|---|---|---|---|
| BF-II-a | 10,45 | 0,84 | 10 | 5 | 5,89 | 5,22 | 37,4 |
| BF-II-b | 2,75 | 0,22 | 1 | 1 | 3,5 | 1,37 | 9,8 |
| BF-II-c | 5,5 | 0,44 | 2 | 2 | 7 | 2,74 | 16,7 |
| BF-II-d | 14,22 | 2,84 | 5,14 | 5,14 | 18,16 | 7,1 | 52,6 |
| BF-II-e | 11 | 0,88 | 4 | 4 | 14 | 5,48 | 39,4 |
| BF-II-f | 8,25 | 0,66 | 3 | 3 | 10,5 | 4,11 | 29,5 |
| BF-II-g | 16,5 | 1,32 | 6 | 6 | 21,1 | 8,22 | 59,1 |
| BF-II-h | 21,98 | 1,76 | 8 | 8 | 28,1 | 10,95 | 78,8 |
| BF-II-i | 10,3 | 0,83 | 8 | 8 | 4,7 | 5,13 | 37,0 |
| BF-II-k | 10,6 | 0,85 | 6,7 | 6,7 | 7,8 | 5,3 | 37,9 |
| BF-II-I | 10,8 | 0,87 | 5 | 5 | 11,7 | 5,4 | 38,8 |
| BF-II-m | 11,0 | 0,89 | 3,3 | 3,3 | 15,6 | 5,5 | 39,6 |
| BF-II-n | 10,4 | 0,84 | 10 | 5 | 5,9 | 5,2 | 37,3 |
| BF-II-o | 10,0 | 0,8 | 6,7 | 6,7 | 6,7 (AMEO) | 5,0 | 35,8 |
| BF-II-p | 10 | 0,8 | 5 (AMEO) | 5 | 10 (IBTEO) | 5,0 | 35,8 |
| BF-II-q | 10 | 0,8 | 12 | 4 | 4,7 | 5,1 | 37,0 |

**Tabelle 2f: Für die Herstellung der Beschichtungsmasse II (BM-II) bzw. Beschichtungsmasse III (BM-III) in den jeweiligen Beispielen eingesetzte Rohstoffe und Mengen**

| BM-II | PF-II | Einwaage PF-II [g] | BF-II | Einwaage BF-II [g] | Einwaage Ethanol [g] |
|---|---|---|---|---|---|
| BM-II-a | PF-II-a | 404 | BF-II-a | 37,4 | 150 |
| BM-I I-b | PF-II-a | 404 | BF-II-b | 9,8 | 150 |
| BM-I I-c | PF-II-a | 404 | BF-II-c | 16,7 | 150 |
| BM-II-d | PF-II-a | 404 | BF-II-n | 37,3 | 150 |
| BM-I I-e | PF-II-a | 404 | BF-II-e | 39,4 | 150 |
| BM-I I-f | PF-II-a | 404 | BF-II-f | 29,5 | 150 |
| BM-II-g | PF-II-a | 404 | BF-II-g | 59,1 | 150 |
| BM-I I-h | PF-II-a | 404 | BF-II-h | 78,8 | 150 |
| BM-I I-i | PF-II-e | 404 | BF-II-e | 39,4 | 150 |
| BM-I I-k | PF-II-f | 404 | BF-II-e | 39,4 | 150 |
| BM-II-I | PF-II-g | 404 | BF-II-e | 39,4 | 150 |
| BM-I I-m | PF-II-a | 404 | BF-II-i | 39,4 | 150 |
| BM-I I-n | PF-II-a | 404 | BF-II-k | 37,9 | 150 |
| BM-I I-o | PF-II-a | 404 | BF-II-l | 38,8 | 150 |
| BM-ll-p | PF-II-a | 404 | BF-II-m | 39,6 | 150 |
| BM-I I-q | PF-II-b | 404 | BF-II-n | 37,3 | 150 |
| BM-I I-r | PF-II-a | 404 | BF-II-i | 37,0 | 150 |
| BM-II-s | PF-II-a | 404 | BF-II-k | 37,9 | 150 |
| BM-I I-t | PF-II-b | 404 | BF-II-e | 39,4 | 150 |
| BM-II-u | PF-II-c | 404 | BF-II-e | 39,4 | 150 |
| BM-II-v | PF-II-d | 404 | BF-II-e | 39,4 | 150 |
| BM-II-w | PF-II-a | 404 | BF-II-q | 37,0 | 150 |
| BM-II-x | PF-II-a | 404 | BF-II-n | 37,3 | 150 |
| BM-III-a | PF-II-a | 404 | BF-II-o | 35,0 | 150 |
| BM-lll-b | PF-II-a | 404 | BF-II-p | 35,0 | 150 |

**Tabelle 2g: Versuche zur Prüfung der Eignung von Substraten**

| Verbundkörper | Substrat | BM | Auftragsvorgänge |
|---|---|---|---|
| A | 1 | BM-I-a | 2 |
| B | 2 | BM-I-a | 2 |
| C | 3 | BM-I-a | 2 |
| D | 4 | BM-I-a | 2 |

**Tabelle 2h: Versuche zur Prüfung der Eignung von Beschichtungsmassen I**

| Verbundkörper | Support | BM | Auftragsvorgänge |
|---|---|---|---|
| E | 1 | BM-I-a | 2 |
| F | 1 | BM-I-b | 2 |
| G | 1 | BM-I-c | 2 |
| H | 1 | BM-I-d | 2 |
| I | 1 | BM-I-e | 2 |
| J | 1 | BM-I-f | 2 |

**Tabelle 2i: Versuche zur Festlegung des Verhältnisses von Binder zu Partikeln in der Beschichtungsmasse II**

| Verbundkörper | Support | BM | Auftragsvorgänge |
|---|---|---|---|
| K | Verbundkörper A | BM-II-b | 2 |
| L | Verbundkörper A | BM-II-c | 2 |
| N | Verbundkörper A | BM-II-e | 2 |
| O | Verbundkörper A | BM-II-f | 2 |
| P | Verbundkörper A | BM-II-g | 2 |
| Q | Verbundkörper A | BM-II-h | 2 |

**Tabelle 2j: Versuche zur Festlegung der einzusetzenden Partikel in der Beschichtungsmasse II**

| Verbundkörper | Support | BM | Auftragsvorgänge |
|---|---|---|---|
| R | Verbundkörper A | BM-II-e | 2 |
| S | Verbundkörper A | BM-II-t | 2 |
| T | Verbundkörper A | BM-II-u | 2 |
| U | Verbundkörper A | BM-II-v | 2 |
| V | Verbundkörper A | BM-II-i | 2 |
| W | Verbundkörper A | BM-II-k | 2 |
| X | Verbundkörper A | BM-II-I | 2 |

**Tabelle 2k: Versuche zur Festlegung der in der Beschichtungsmasse II einzusetzenden Binderformulierunq**

| Verbundkörper | Support | BM | Auftragsvorgänge |
|---|---|---|---|
| 2A | Verbundkörper A | BM-II-e | 2 |
| 2B | Verbundkörper A | BM-II-m | 2 |
| 2C | Verbundkörper A | BM-II-n | 2 |
| 2D | Verbundkörper A | BM-II-o | 2 |
| 2E | Verbundkörper A | BM-II-p | 2 |
| 2F | Verbundkörper A | BM-II-q | 2 |
| 2G | Verbundkörper A | BM-II-w | 2 |
| 2H | Verbundkörper A | BM-II-x | 2 |

**Tabelle 2l: Versuche zur Festlegung der in der Beschichtungsmasse II einzusetzenden Binderformulierung (Eintopf-Verfahren)**

| | | | |
|---|---|---|---|
| 2I | Verbundkörper A | BM-III-a | 2 |
| 2K | Verbundkörper A | BM-III-b | 2 |

### Beispiel 2: Charakterisierung der Verbundkörper

Die in den Beispielen hergestellten Verbundkörper wurden wie nachfolgend beschrieben charakterisiert. Die Ergebnisse sind in Tabelle 3 zusammengestellt.

Die Bestimmung der Rauhigkeiten Rdq min., Rdq max. und SDQ erfolgte wie oben detailliert beschrieben.

Verbundkörper A bis D:
Alle Proben besitzen einzelne Bereiche die eine geringe Rauheit zeigen (Rdq min). Allerdings konnte den erstellten Bildern entnommen werden, dass die Monofilament-gewebe strukturbedingt regelmäßig Höhen und Tiefen aufweisen. Daher scheidet dieses Material bei der weiteren Betrachtung aus.

Zur Realisierung möglichst glatter Oberflächen, muss bereits die erste keramische Schicht möglichst homogen sein. Substrat-Materialien wie "Monofilament-Gewebe" erscheinen deshalb weniger geeignet.

Glasfasergewebe wären sehr gut geeignet, aber diese neigen zur Rissbildung in der Keramikschicht, weil die Fäden (Zwischenräume zwischen den Einzelfasern) schlecht durchtränkt werden.

"Nassgelegte" Vliese wie auch Papiere zeichnen sich durch recht glatte Strukturen aus (ohne herausstehende Fasern) und sind daher als Support gut geeignet. Allerdings sind bei Verwendung dicker Einzelfasern die Zwischenräume zwischen den Fasern genau zu beachten, da diese möglichst vollständig gefüllt (geschlossen) werden müssen. Schlecht geeignet sind Spinnvliese und Meltblownvliese, ebenso "trocken gelegte Nadelvliese. Besonders geeignete Substrate sind deshalb PET-Vlies und Carbon-Faser-Vlies.

Zudem muss ein mehrschichtiger Aufbau gewählt werden, da eine einzelne Beschichtung allein keine ausreichend glatte Oberfläche bietet. Die erste Schicht dient vor allem dem Füllen der Faserzwischenräume. Danach müssen die Schichten glatter werden, gleichzeitig ist eine Verkleinerung der Porenradien durch Verwendung kleinerer Partikel anzustreben.

Verbundkörper E bis J:
Eine Doppelbeschichtung mit den verschiedenen Partikeln, zeigt, dass ct1200SG und MZS1 am besten geeignet sind. Bei diesen sind die Faserzwischenräume am besten gefüllt, wodurch sich eine relativ ebene Oberfläche ergibt. Feinere und auch größere Partikel führen zu schlechterer Füllung der Faserzwischenräume (ct 3000 SG bzw. MZS3).

Mit einer Mischung aus MZS1 und MZS3 erhält man auch relativ gute Oberflächenqualitäten, allerdings verbunden mit einem größeren mittleren Porenradius. Da als resultierende Membranoberfläche ein Material mit Poren von weniger als 100 nm Größe bereitgestellt werden soll, wurde im Weiteren vor allem mit ct1200SG weitergearbeitet (wobei MZS1 genauso gut geeignet wäre).

Verbundkörper K bis Q:
Bei Auftragung weiterer Schichten von feinen Ox50 Partikel auf die ct1200SG-Oberfläche wird die mittlere Porenweite reduziert und die Oberflächengüte verbessert, es wurden Variationen der Zusammensetzung von Partikelanteil zu Silan-Binder-Anteil durchgeführt.

Sehr geringe Binder-Anteile führen zu einer eher unebeneren Oberfläche als höhere Binderanteile. Wobei einer Erhöhung auf den doppelten Gehalt bereits wieder zu einer Verschlechterung des Sdq-Wertes führt. Das Optimum liegt bei einem Mischungsverhältnis von Aerosil OX50 / Silan-Binder von 50:50 (g/g) bis hin zu 65:35(g/g).

Verbundkörper R bis X:
Bei Vergleich der verschiedenen verwendeten Partikel fällt zum einen auf, das Silanbinder mit Siliziumdioxid-Partikeln recht gute glatte Oberflächen ergeben. Aufgrund der Partikelstruktur sind aber Aerosil 90 und Aerosil 200 (aggregierte Primärpartikel) genauso wie das Aluminiumoxid Alu C weniger geeignet. Ox-50 hat abgestimmt auf die Poren der zu beschichtenden Unterstruktur die geeignetsten Partikel (Partikelgröße).

Titandioxid P25 ist bei den gewählten Bedingungen nur schlecht mit dem Bindersystem stabilisierbar und bildet daher sehr schlechte Oberflächen aus. Zirkonoxid (der Fa. Roth) ist nahezu genauso geeignet wie Ox50. Levasil hat sehr kleine, sehr gut stabilisierte SiOz-Partikel, die aber so klein sind, dass diese in die Poren der Unterstruktur (ct 1200SG) gesaugt werden. Daher unterscheidet sich die Oberflächengüte dieser Probe kaum von der der nicht nachbeschichteten ct1200SG Oberfläche.

Verbundkörper 2A bis 2H:
Es zeigte sich, dass sowohl hydrophil eingestellte Silanmischungen (Anteil an TEOS und GLYEO höher) als auch hydrophob eingestellte (Anteil MTES höher) glatte Beschichtungen ergeben. Einzig die Proben, welche mit einem erhöhten Anteil der Vernetzenden Komponente TEOS hergestellt wurden (TEOS-Anteil > 25 %), zeigten schlechtere Oberflächenqualitäten.

Die Ergebnisse scheinen im Wesentlichen unabhängig vom gewählten Partikelsystem zu sein, das heißt, dass im jeweiligen Partikelsystem die Tendenzen (nicht die absoluten Ergebnisse) gleich sind.

Kontaktwinkel nicht messbar (nm) erscheint in der Tabelle 3, wenn die Oberfläche so hydrophil ist, dass ein Wassertropfen aufgesaugt wird.

Verbundkörper 2I und 2K:
Die Herstellung von Mischungen mit Aminosilanen ist in der beschriebenen Form nicht möglich. Um diese Proben herstellen zu können, muss in das Gefäß, in dem bereits die Partikeldispersion gerührt wird, das Silangemisch, ohne Vorhydrolyse, gegeben und dort hydrolysiert werden (Eintopfverfahren). Andernfalls würde das Vorhydrolysat fest werden (Vergelen).

Ein Austausch der haftvermittelnden Komponente GLYEO gegen AMEO ist prinzipiell möglich. Insbesondere können dadurch (und durch den sich einstellenden veränderten pH-Wert) andere Partikelsysteme wie z.B. P25 gut eingesetzt werden.

Verschiedene Alkylsilane (IBTEO) führen im Gegensatz zum MTES zu einer verstärkten Neigung zur Agglomerat-Bildung. Dies führt dann zu sehr unebenen Oberflächen.

**Tabelle 3: Ergebnisse der Charakterisierung der in den Beispielen und im Vergleichsbeispiel hergestellten Verbundkörper**

| Verbundkörper | Rdq min. | Rdq max. | SDQ | Kontaktwinkel | Flächengewicht | Dicke | Zugfestigkeit Maschinenrichtung | Zugfestigkeit, Quer | MFP | Gurley-Zahl |
|---|---|---|---|---|---|---|---|---|---|---|
| A | 5,5 | 52,5 | 18,9 | 88 | 215 | 118 | > 50 | 37 | 0,27 | 340 |
| B | 7,1 | 42,4 | 34,7 | 73 | 163 | 120 | 49,1 | 20 | 0,31 | 110 |
| C | 5,1 | 9,0 | 10,5 | 80 | 211 | 125 | > 50 | > 50 | -- | 290 |
| D | 7,2 | 17,2 | 18,0 | 82 | 307 | 256 | > 50 | 40 | 0,38 | 580 |
| E | 7,8 | 58,6 | 21 | 125 | 230 | 157 | >50 | 40 | 0,32 | 190 |
| F | 3,9 | 66,0 | 45,2 | 54 | 279 | 172 | >50 | 43 | 3,7 | 1100 |
| G | 6,6 | 10,8 | 12,9 | 84 | 238 | 141 | 47 | 36 | 0,38 | 340 |
| H | 12,4 | 32,4 | 28,2 | 7 | 254 | 225 | 48 | 36 | 0,77 | 110 |
| I | 9,6 | 16,8 | 18,4 | -- | 285 | 174 | 49 | 34 | 0,45 | 250 |
| J | 3,5 | 8,7 | 8,0 | -- | 208 | 146 | 47 | 43 | 0,18 | 1010 |
| K | 3,6 | 6,9 | 7,8 | -- | 218 | 142 | 43 | 43 | 0,11 | 900 |
| L | 5,2 | 9,5 | 11,0 | 8,17 | 245 | 138 | >50 | 37 | 0,11 | 500 |
| N | 5,4 | 16,0 | 11,0 | 8,02 | 206 | 147 | >50 | 36 | 0,11 | 550 |
| O | 4,2 | 9,8 | 8,4 | 75,74 | 206 | 139 | >50 | 38 | 0,12 | 440 |
| P | 3,3 | 5,4 | 6,5 | -- | 205 | 135 | >50 | 40 | 0,12 | 550 |
| Q | 3,7 | 15,0 | 9,7 | 40,1 | 209 | 142 | >50 | 33 | 0,13 | 720 |
| R | 3,4 | 8,5 | 7,5 | -- | 209 | 144 | >50 | 30 | 0,11 | 740 |
| S | 12,0 | 52,0 | 40,0 | 35,55 | 211 | 148 | >50 | 39 | 0,26 | 400 |
| T | 13,0 | 59,0 | 57,0 | 26,21 | 209 | 147 | >50 | 32 | 0,26 | 470 |
| U | 5,3 | 21,0 | 15,0 | 15,43 | 209 | 141 | >50 | 37 | 0,22 | 520 |
| V | 67,0 | 79,0 | 82,0 | -- | 210 | 154 | >50 | 33 | 0,30 | 640 |
| W | 5,7 | 15,0 | 13,0 | 11,48 | 208 | 140 | >50 | 26 | 0,12 | 540 |
| X | 5,8 | 45,0 | 16,0 | 20,35 | 206 | 136 | >50 | 38 | 0,29 | 1600 |
| 2A | 3,4 | 8,5 | 7,5 | -- | 209 | 144 | >50 | 30 | 0,11 | 740 |
| 2G | 5,6 | 22,0 | 14,0 | 74,7 | 209 | 153 | 50 | 46 | 0,14 | 560 |
| 2H | 5,2 | 9,5 | 11,0 | 79,99 | 243 | 138 | 48 | 30 | 0,12 | 440 |
| 2B | 6,1 | 31, | 18,0 | 52,09 | 223 | 167 | >50 | 42 | 0,10 | 750 |
| 2C | 6,6 | 12,0 | 17,0 | -- | 227 | 170 | >50 | 31 | 0,20 | 750 |
| 2D | 4,5 | 12,0 | 12,0 | -- | 251 | 146 | 49 | 34 | 0,12 | 710 |
| 2H | 4,5 | 12,0 | 13,0 | 63,44 | 196 | 128 | >50 | 28 | 0,087 | 710 |
| 2E | 3,7 | 15,0 | 11,0 | -- | 242 | 141 | >50 | 31 | 0,12 | 610 |
| 2F | 12,0 | 52,0 | 40,0 | 120,13 | 249 | 155 | >50 | 36 | 0,26 | 460 |
| 2I | 5,4 | 8,4 | 7,8 | 43,17 | 206 | 145 | 49 | 40 | 0,11 | 470 |
| 2K | 6,0 | 13,9 | 10,7 | 106,8 | 209 | 148 | >50 | 32 | 0,10 | 550 |

| | | | | | | | | | | |
|---|---|---|---|---|---|---|---|---|---|---|
| -- = nicht messbar | | | | | | | | | | |

### Beispiel 3: Kontinuierliches Verfahren zur Herstellung eines Verbundkörpers

Zur Herstellung eines erfindungsgemäßen Verbundkörpers (analog A) in einem kontinuierlichen Beschichtungsverfahren auf einer entsprechenden Fertigungsanlage, wie diese beispielsweise von der Fa. Matthis gefertigt werden, die aus einer Support-Abwicklung, einer Beschichtungseinheit, einer Trocknung und einer Aufwicklung mit Zugspannungskontrolle besteht, wurde die Beschichtungsmasse BM-I-a in einer ca. 125 fach vergrößerten Ansatzmenge in einem gerührten 70L-Edelstahl-Gefäß wie oben beschrieben hergestellt. Diese wurde dann im DipCoat-Verfahren unter Beibehalten einer Zugspannung von > 1N/cm Warenbahnbreite auf einem Polyester-Vlies-Support (Vlies 05-TH-60W) mit einer Breite von ca. 30 cm und bis zu 500 Metern Länge beschichtet, wobei es auch zu einem Durchtränken des Supports kam. Dieser wurde ca. 50 cm nach dem DipCoat in einen 5 m langen Umluftofen eingebracht, in dem der Verbundwerkstoff bei 140 °C getrocknet wurde. Die Warenbahngeschwindigkeit betrug 1,5 m/min.

Nach dem Trocknen der Warenbahn wurde diese bei der gegebenen Zugspannung aufgewickelt und anschießend in einem erneuten Beschichtungsvorgang ein zweites Mal unter Beibehaltung aller Verfahrensparameter behandelt. Der resultierende Verbundkörper K-VK-1 (analog zu Verbundkörper A) wird durch die in Tabelle 4 angegebenen Parameter beschrieben.

### a) Hydrophiler Verbundkörper

Dieser Verbundkörper K-VK-1 wurde nachfolgend mit einer im ca. 10 fach vergrößertem Maßstab hergestellten Beschichtungsmasse BM-II-e in der unter gleichen Maschinenparametern betriebenen gleichen Anlage zweimal beschichtet. Der resultierende kontinuierlich hergestellte Verbundkörper K-VK-2 (analog zu Verbundkörper R) wird durch die in Tabelle 4 angegebenen Parameter beschrieben.

### b) Hydrophober Verbundkörper

Der Verbundkörper K-VK-1 wurde nachfolgend mit einer im ca. 10 fach vergrößertem Maßstab hergestellten Beschichtungsmasse BM-II-x in der unter gleichen Maschinenparametern betriebenen gleichen Anlage zweimal beschichtet. Der resultierende kontinuierlich hergestellte Verbundkörper K-VK-3 (analog zu Verbundkörper 2H) wird durch die in Tabelle 4 angegebenen Parameter beschrieben.

**Tabelle 4: Parameter zu den in Beisoiel 3 heraestellten Verbundköroern**

| Verbundkörper | Rdq min. | Rdq max. | SDQ | Kontaktwinkel | Flächengewicht | Dicke | Zugfestigkeit Maschinenrichtung | Zugfestigkeit Quer | MFP [µm] | Gurley-Zahl |
|---|---|---|---|---|---|---|---|---|---|---|
| K-VK-1 | 6,7 | 19,3 | 14,3 | 85 | 185 | 138 | > 50 | 34 | 0,25 | 350 |
| K-VK-2 | 4,5 | 13,5 | 11,6 | 24 | 212 | 144 | > 50 | 30 | 0,11 | 740 |
| K-VK-3 | 3,3 | 5,4 | 6,5 | 89 | 197 | 141 | > 50 | 38 | 0,09 | 800 |

### Beispiel 4: Verbundkörper mit einer Polymerschicht

### a) Herstellung von verschiedenen Lösungen perfluorierter Poplymere

Die Herstellung der verschiedenen Lösungen zur Beschichtung erfolgte in der Weise, dass das entsprechende Polymer, so wie es vom Hersteller bezogen wurde mit der entsprechenden Menge Lösemittel versetzt wurde. Zur Unterstützung des Lösevorganges wurde das Gemisch auf 60 °C für mehrere Stunden erwärmt, bis das gesamte Polymer gelöst war. Über Nacht kühlte die Lösung ab und konnte am nächsten Tag bei leicht erhöhter Temperatur über einen 5 µm Papierfilter filtriert werden, um die letzten ungelösten Bestandteile (Verunreinigungen) zu entfernen. Nach erfolgter Filtration kann die Lösung mehrere Monate gelagert bzw. verarbeitet werden. Die Zusammensetzungen der in Beispiel 4a hergestellten Lösungen ist der folgenden Tabelle 5 zu entnehmen. Die Konzentrationen wurden mit einer Rückstandsbestimmungswaage MA 150Q der Fa. Sartorius, Deutschland, bestimmt. Die Werte entsprechen einem Trockenrückstand [%] nach Trocknung bei 120 °C. Die Viskosität wurde mit einem Rotationsviskosimeter der Fa. Malvern Instruments limited, Wocestershire, UK Typ Kinexus KNX2112 bei einer Scherrate von 100 s-¹ und einer Temperatur von 25 °C bestimmt.

**Tabelle 5: Zusammensetzungen und Parameter der Lösungen PL 1 bis 8**

| PolymerLösung | Polymer | Einwaage | Lösemittel | Einwaage | Trockenrückstand | Viskosität |
|---|---|---|---|---|---|---|
| PL-1 | Cytop-ctl 109 AE | 28g | Ct-100-solv | 72g | 2,5 % | 4 |
| PL-2 | Cytop-ctl 107 MK | 36g | Ct-100-solv | 64g | 2,5 % | 3 |
| PL-3 | Cytop-ctx 109 AE | 45g | Ct-100-solv | 55g | 4,0 % | 8 |
| PL-4 | Hyflon AD60 | 4g | Ct-100-solv | 96g | 4,0 % | 9 |
| PL-5 | Hyflon AD60 | 4g | Novec 7300 | 96g | 4,0 % | 11 |
| PL-6 | Hyflon AD 60 | 3g | Galden HT55 | 97g | 3,0 % | 6 |
| PL-7 | Hyflon AD60 | 2,8g | Ct-100-solv | 97g | 2,8 % | 7 |
| PL-8 | Hyflon AD60 | 2,5g | Ct-100-solv | 97g | 2,5 % | 6 |

### b) Herstellung einer Polymerlösung (PL-9)

Es wurden 10 g der Komponente A (RTV-615A) in 90 g Hexamethyldisiloxan in einem Rundkolben vorgelegt und auf 60 °C erwärmt. Nach Erreichen der vorgegebenen Temperatur wurde 1 g Komponente B (RTV-615B) in 10 g Hexamethyldisiloxan zugegeben. Die sich unter diesen Bedingungen sehr gut mischenden Komponenten ließ man nach 2 h Rührdauer abkühlen und kontrollierte nach Verdünnung mit Hexamethyldisiloxan auf einen Gehalt von 92 Gew-% an Hexamethyldisiloxan in der Lösung die Viskosität. Diese betrug zunächst 13 mPas und veränderte sich mit der Zeit und stieg kontinuierlich an. Die Verarbeitung dieser Lösung und die Beschichtung des Verbundkörpers erfolgte, solange die Viskosität im Bereich von 5 bis 50 mPas liegt. Die Viskositäten wurden mit einem Rotationsviskosimeter der Fa. Malvern Instruments limited, Wocestershire, UK Typ Kinexus KNX2112 bei einer Scherrate von 100 s-¹ und einer Temperatur von 25 °C bestimmt. Die Topfzeit des idealen Verarbeitungsfensters liegt bei ca. 2 Stunden.

### c) Herstellung einer Polymerlösung (PL-10)

Die Lösung wurde erhalten durch Zusammengeben von Lösung A und Lösung B im (Gewichts-)Verhältnis 1:1. Dabei enthielt Lösung A 99,8 Gew.-% der Vinyldimethylpolysiloxan-VinylQM-Harzmischung VQM 906 und 0,2 Gew.-% Katalysator 511. Lösung B enthielt 52,99 Gew.-% des vinylfunktionellen Polydimethylsiloxans VS 165.000, 38,99 Gew.-% des SiH-haltigen Polydimethylsiloxans Crosslinker-120, 8 Gew.-% der Vinyldimethylpolysiloxan-VinylQM-Harzmischung VQM 906 sowie 0,02 Gew.-% des Inhibitors Methylbutinol. Diese Mischung wurde direkt vor der Verwendung mit Hexamethyldisiloxan verdünnt, so dass die eingesetzte Lösung einen Gehalt an Hexamethyldisiloxan von 85 Gew.-% und eine Viskosität von 9 mPas aufwies. Diese wurde mit einem Rotationsviskosimeter der Fa. Malvern Instruments limited, Wocestershire, UK Typ Kinexus KNX2112 bei einer Scherrate von 100 s-¹ und einer Temperatur von 25 °C bestimmt.

### d) Herstellung einer Polymerlösung (PL-11)

Es wurden 10 g der Komponente A (RTV-615A) in 90 g Hexamethyldisiloxan in einem Rundkolben vorgelegt und auf 60 °C erwärmt. Nach Erreichen der vorgegebenen Temperatur wurden 1 g Komponente B (RTV-615B) in 10 g Hexamethyldisiloxan zugegeben. Die sich unter diesen Bedingungen sehr gut mischenden Komponenten ließ man nach 2h Rührdauer abkühlen und kontrollierte nach Verdünnung auf einen Gehalt von 95 Gew-% an Hexamethyldisiloxan in der Lösung die Viskosität. Diese lag zunächst bei 6 mPas und veränderte sich mit der Zeit und stieg kontinuierlich an. Die Verarbeitung dieser Lösung und die Beschichtung des Verbundkörpers erfolgte, solange die Viskosität im Bereich von 5 bis 50 mPas liegt. Diese wurde mit einem Rotationsviskosimeter der Fa. Malvern Instruments limited, Wocestershire, UK Typ Kinexus KNX2112 bei einer Scherrate von 100 s-¹ und einer Temperatur von 25 °C bestimmt. Die Topfzeit des idealen Verarbeitungsfensters liegt bei ca. 2 Stunden.

### e) Herstellung einer Polymerlösung (PL-12)

Eine wie unter c) hergestellte Lösung wurde mit Hexamethyldisiloxan auf 95 Gew.-% an statt auf 92 Gew.-% Hexamethyldisiloxan verdünnt. Nach Homogenisierung für 2 Stunden wurde diese für die Beschichtung verwendet.

### f) Herstellung einer Polymerlösung (PL-13)

Eine Mischung aus 70 g RC-Silikon Typ 702, Fa. Evonik Resource Efficiency GmbH, und 30 vg RC-Silikon Typ 902 wurden mit 900 g iso-Propanol, Fa. Obermeier GmbH, unter starkem Rühren gemischt und mit 2 g Photoinitiator Typ A18, Fa. Evonik Resource Efficiency GmbH, versetzt. Diese Lösung wurde innerhalb von 2 Tagen verarbeitet oder gut verschlossen, dunkel gelagert.

### g) Beschichtung eines Verbundkörper mit Polymeren

Ein Verbundkörper wurde in einem Trockenschrank bei 100 °C für mindestens 2 h vorgetrocknet, anschließend im DipCoat-Verfahren, wie bereits in Beispiel 1f beschrieben, beschichtet. Dazu wurde eine automatisierte Filmziehvorrichtung der Fa. Zehntner so modifiziert, dass diese mit einem Seilzugmechanismus die zu beschichtenden Bahnwaren mit einer vorgegebenen Geschwindigkeit von 42 mm/s senkrecht aus einer DipCoat Vorrichtung, in der eine Seite der Warenbahn über eine Walze umgelenkt wird und somit nicht mit der Beschichtungslösung in Kontakt kommt und die andere Seite der Warenbahn durch eine mit der Lösung gefüllte Wanne gefördert wird, nach oben gezogen wird.

Zur Beschichtung wurde die fertig gemischte Lösung in eine Wanne gegeben, in der eine mit der Warenbahn umspannte Rolle lief. Der Füllstand der Wanne wurde so eingestellt, dass die Rolle nur mit 45 ° seines Umfangs in die Lösung eintaucht. Zur guten Führung der Warenbahn, und um ein Hinterlaufen der Warenbahn durch die Lösung zu verhindern, betrug die Bahnspannung ca. 0,1 N/cm Warenbahnbreite. Die Warenbahn wurde mit einer Geschwindigkeit von 42 mm/s bei Raumtemperatur und Normaldruck durch die Lösung geführt. Nachdem die Beschichtung abgeschlossen war verblieb die Warenbahn noch 15 Minuten hängend bei Raumtemperatur in der Apparatur damit das Lösemittel weitgehend verdunsten konnte.

Erst nach einer Trocknung der Warenbahn bei 120 °C über Nacht in einem Trockenschrank wurde diese charakterisiert. Eine Zusammenstellung der verwendeten Verbundkörper und Beschichtungslösungen findet sich in Tabelle 6.

Die verschiedenen Verbundwerkstoffe wurden teilweise anstatt bei 100 °C vorgetrocknet zu werden mit einer Corona behandelt. Dazu wurde der Verbundkörper mit der Vorderseite nach oben auf einem elektrisch nicht leitenden Material, PET-Vlies, Fa. Sojitz, 05-TH-60W befestigt und durch eine Corona Behandlungsanlage (Fa. Softal, Hamburg) mit einer Geschwindigkeit von 1,5 m/min gefördert. Die Leistung der Corona-Behandlung kann variabel angepasst werden. Die Versuchseinstellung sind ebenfalls der Tabelle 6 zu entnehmen.

Bei Verwendung von RC-Silikonen, wurden diese nach der Trocknung, sobald das Lösemittel entfernt wurde mit UV-Licht (UV-Laborgerät LAB 200UV der Fa. Eltosch, Hamburg) bei einer Badgeschwindigkeit von 1,5 m/min ausgehärtet.

Alle Verbundkörper wurden durch Bestimmung (erfolgte wie oben ausgeführt) der Reingasselektivität für CO₂ / CH₄ und des Flusses von CO₂ charakterisiert.

**Tabelle 6: Versuchsparameter und Ergebnisse aus Beispiel 4g.**

| Resultierender Verbundkörper | Eingesetzter Verbundkörper | Genutzte Lösung | Corona-Leistung [W min / m] | ReingasSelektivität CO₂/CH₄ | Fluss CO₂ [GPU] |
|---|---|---|---|---|---|
| P-VK-1 | K-VK-2 | PL-1 | 0 | 17 | 13 |
| P-VK-2 | K-VK-2 | PL-2 | 0 | 9 | 41 |
| P-VK-3 | K-VK-2 | PL-3 | 0 | 17 | 12 |
| P-VK-4 | K-VK-2 | PL-4 | 0 | 12 | 40 |
| P-VK-5 | K-VK-2 | PL-5 | 0 | 4 | 58 |
| P-VK-6 | K-VK-2 | PL-6 | 0 | 3 | 55 |
| P-VK-7 | K-VK-3 | PL-9 | 600 | 3 | 730 |
| P-VK-8 | K-VK-3 | PL-10 | 600 | 3 | 820 |
| P-VK-9 | P-VK-7 | PL-7 | 200 | 13 | 120 |
| P-VK-10 | P-VK-7 | PL-8 | 200 | 12 | 140 |
| P-VK-11 | P-VK-9 | PL-11 | 400 | 12 | 110 |
| P-VK-12 | P-VK-10 | PL-12 | 400 | 12 | 120 |
| P-VK-13 | P-VK-9 | PL-13 | 400 | 11 | 95 |

Die Figuren Fig. 1 und Fig. 2 zeigen REM Aufnahmen eines Schnitts durch den Verbundkörper P-VK-11 in unterschiedlicher Vergrößerung.

Verbundkörper P-VK-9 bis P-VK-13 können bevorzugt in Apparaturen zur Gastrennung eingesetzt werden, da diese relativ hohe Reingasselektivitäten mit einem hohen Fluss für Kohlendioxid verbinden. Dies macht den Einsatz in Anlagen zur Trennung entsprechender Stoffgemische effizient und verbessert somit die Wirtschaftlichkeit der entsprechenden Trennprozesse.

Die Verbundkörper P-VK11 bis P-VK-13 zeichnen sich zudem durch eine recht gute Toleranz gegenüber der Handhabung der Verbundkörper aus. Dies reduziert die Wahrscheinlichkeit des Auftretens von Fehlern oder Beschädigungen am oder im Verbundkörper, die während des Einbringens in eine Apparatur zur Trennung von Gasgemischen auftreten können. Typische Fehler oder Beschädigungen wären Brüche in der Keramik aufgrund von Knicken oder der Behandlung mit spitzen Gegenständen.

Alle Verbundkörpern P-VK-1 bis 13 sind flexibel und können ohne Beschädigung um einen Stab oder um ein Rohr mit einem Durchmesser von bis herab zu 15 mm gewickelt werden. Die Verbundkörper P-VK-11 bis P-VK-13 können auf minimale Durchmesser von bis herab zu 5 mm ohne Beschädigung gewickelt werden. Die Beschädigungsfreiheit der entsprechenden Verbundkörper kann leicht durch die Bestimmung der Reingasselektivität, welche vor und nach der Behandlung gleich ist, nachgewiesen werden. Hierbei wird eine Reduzierung der Reingasselektivität um 2 Einheiten als "Defekt im Verbundkörper" gewertet.

Durch die Flexibilität der Verbundkörper sind diese sehr einfach in typischen Modulformen für Flachmembranen einbringbar und eignen sich insbesondere zur Verwendung in Spiral-Wickel-Modulen, Plate und Frame Modulen, Taschenmodulen und andere Apparaturen, die für Flachmembranen entworfen wurden.

Durch die keramische Struktur der Verbundkörper P-VK-1 bis 13 verändern diese bei einer Druckbeaufschlagung ihre Dicke und Porosität nahezu nicht. Dieses ist entscheidend dafür, dass der gesamte Verbundkörper eine bei Hoher Druckbeaufschlagung nahezu konstante Flussleistung in GPU zulässt und der Fluss nicht bei höheren Drücken durch eine sich verdichtende poröse Struktur reduziert.

Zur Bestimmung dieses Verhaltens wurden Verbundkörper (P-VK-4) als kreisrunde Probe mit einem Durchmesser von 35 mm ausgeschnitten und in einer hydraulischen Presse unter gleichzeitiger Bestimmung der Dicke mit einem Druck von bis zu 52 bar beaufschlagt (Messgerät der Firma INSTRON). Aus einem Diagramm in dem die Dicke als Funktion des Pressendrucks aufgetragen ist, kann man nach mehreren Zyklen aus Druckbeaufschlagung und Entspannung einen elastischen Teil der Dickenänderung errechnen. Dieser liegt bei nur 6 % für diesen Verbundkörper.

## Patentansprüche

1. Verbundkörper, der auf einem porösen Substrat und in den Zwischenräumen des Substrats, welches Fasern, vorzugsweise aus einem elektrisch nicht leitendem Material, aufweist, eine poröse Schicht (1) aus miteinander und teilweise mit dem Substrat verbundenen Oxidpartikeln, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist, zumindest auf einer Seite eine weitere poröse Schicht (2) aufweist, die miteinander und teilweise mit der Schicht (1) verbundene Oxidpartikel, die zumindest ein Oxid, ausgewählt aus Oxiden der Elemente Al, Zr, Ti und Si, bevorzugt ausgewählt aus Al₂O₃, ZrO₂, TiO₂ und SiO₂ aufweisen, aufweist,
wobei die in der Schicht (1) vorhandenen Oxidpartikel eine größere mittlere Partikelgröße aufweisen als die in der Schicht (2) vorhandenen Oxidpartikel,
**dadurch gekennzeichnet,**
**dass** die mittlere Partikelgröße (d50) der Oxidpartikel in der Schicht (1), bestimmt wie in der Beschreibung angegeben, von 0,5 bis 4 µm beträgt und die mittlere Partikelgröße (d50) der Oxidpartikel in der Schicht (2), bestimmt wie in der Beschreibung angegeben, von 0,015 bis 0,15 µm, bevorzugt 0,04 bis 0,06 µm beträgt.

2. Verbundkörper nach Anspruch 1,
**dadurch gekennzeichnet,**
**dass** der Verbundkörper eine Gurley-Zahl, bestimmt wie in der Beschreibung angegeben, von 200 bis 1700 sec, bevorzugt 250 bis 1200 sec und besonders bevorzugt von 300 bis 800 sec aufweist.

3. Verbundkörper nach Anspruch 1 oder 2,
**dadurch gekennzeichnet,**
**dass** der Verbundkörper eine Dicke von 100 bis 400 µm, bevorzugt 125 bis 200 µm und besonders bevorzugt von 130 bis 170 µm aufweist

4. Verbundkörper nach zumindest einem der Ansprüche 1 bis 3,
**dadurch gekennzeichnet,**
**dass** das Substrat ein Vlies, Gewirke oder Gelege, bevorzugt ein Vlies oder Gelege, besonders bevorzugt ein Vlies ist.

5. Verbundkörper nach zumindest einem der Ansprüche 1 bis 4,
**dadurch gekennzeichnet,**
**dass** die Fasern eine Dimension von 1 bis 200 g/km Faser aufweisen und bevorzugt aus Polyacrylnitril, Polyamid, Polyester und/oder Polyolefin sind.

6. Verbundkörper nach zumindest einem der Ansprüche 1 bis 5,
**dadurch gekennzeichnet,**
**dass** das Substrat eine Dicke von 50 bis 150 µm, bevorzugt 100 bis 130 µm und ein Flächengewicht von 40 bis 150 g/m², bevorzugt 50 bis 120 g/m², bevorzugt 50 bis 100 g/m² und ganz besonders bevorzugt 60 g/m² aufweist.

7. Verbundkörper nach zumindest einem der Ansprüche 1 bis 6,
**dadurch gekennzeichnet,**
**dass** der Verbundkörper eine mittlere Porenweite, bestimmt wie in der Beschreibung angegeben, von 60 bis 140, bevorzugt 75 bis 130 nm, aufweist.

8. Verbundkörper nach zumindest einem der Ansprüche 1 bis 7,
**dadurch gekennzeichnet,**
**dass** der Verbundkörper auf der Oberfläche der Schicht (2) eine Oberflächenrauhigkeit Sdq, bestimmt wie in der Beschreibung angegeben, von kleiner 10 µm, besonders bevorzugt von weniger als 8 µm aufweist.

9. Verbundkörper nach Anspruch 8,
**dadurch gekennzeichnet,**
**dass** auf oder oberhalb der Schicht (2) eine Polymerschicht (PS) vorhanden ist, die bevorzugt eine Gastrennschicht ist.

10. Verbundkörper nach Anspruch 8 oder 9,
**dadurch gekennzeichnet,**
**dass** die Polymerschicht (PS) ein perfluoriertes Polymer enthält, bevorzugt daraus besteht.

11. Verfahren zur Herstellung eines Verbundkörpers, bevorzugt gemäß zumindest einem der Ansprüche 1 bis 10,
**dadurch gekennzeichnet, dass** es die folgenden Schritte aufweist:
(a) Aufbringen einer Beschichtungsmasse (BM1) auf und in ein Substrat, welches Fasern und Zwischenräume zwischen den Fasern aufweist, wobei die Beschichtungsmasse hergestellt wird durch Vereinen
(a1) einer Dispersion (D1) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(a2) einer Dispersion (D2) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 15 bis 150 nm, vorzugsweise 40 bis 60 nm aufweisen, mit Wasser,
(a3) einer Binderformulierung (BF1), hergestellt durch Mischen von mindestens zwei organofunktionellen Silanen mit einem Alkanol, vorzugsweise Ethanol, einer anorganischen Säure, vorzugsweise Borsäure, und Wasser,
(b) Verfestigen der Beschichtungsmasse (BM1) bei einer Temperatur von 100 °C bis 275 °C, vorzugsweise 120 bis 240 °C, um eine erste Schicht (S1') zu schaffen,
(c) optional Aufbringen einer Beschichtungsmasse (BM2) auf mindestens die Schicht (S1'), wobei die Beschichtungsmasse (BM2) hergestellt wird durch Vereinen
(c1) einer Dispersion (D3) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 0,5 bis 4 µm aufweisen, mit Wasser, einer anorganischen Säure, vorzugsweise Salpetersäure, und einem Dispergierhilfsmittel,
(c2) einer Dispersion (D4) von Oxidpartikeln, hergestellt durch Mischen von Oxidpartikeln, ausgewählt aus den Oxiden der Elemente Ti, Al, Zr und/oder Si, die einen mittleren Partikeldurchmesser (d50) von 15 bis 150 nm, bevorzugt 40 bis 60 nm aufweisen, mit Wasser,
(c3) einer Binderformulierung (BF2), hergestellt durch Mischen von mindestens zwei organofunktionellen Silanen mit einem Alkanol, vorzugsweise Ethanol, einer anorganischen Säure, vorzugsweise Borsäure, und Wasser,
(d) optional Verfestigen der Beschichtungsmasse (BM2) bei einer Temperatur von 100 °C bis 275 °C, vorzugsweise 120 bis 240 °C, um eine zweite Schicht (S2`) zu schaffen,
(e) Aufbringen einer Beschichtungsmasse (BM3) auf die Schicht (S1') oder, falls vorhanden, die Schicht (S2`), wobei die Beschichtungsmasse (BM3) hergestellt wurde durch Vereinigen von Wasser und einer anorganischen Säure mit einer
(e1) Oxidpartikel, ausgewählt aus den Oxiden der Elemente Ti, Al, Zr und/oder Si, die einen mittleren Partikeldurchmesser (d50) von 15 bis 150 nm, bevorzugt 40 bis 60 nm, aufweisen, aufweisenden wässrigen Dispersion (D5), sowie mit Ethanol und mit einer
(e2) Binderformulierung (BF3), die mindestens zwei organofunktionelle Silane umfasst,
(f) Verfestigen der Beschichtungsmasse bei einer Temperatur von 100 °C bis 275 °C, vorzugsweise 120 bis 240 °C, um eine Schicht (S3`) zu schaffen,
(g) optional Aufbringen einer Beschichtungsmasse (BM4) auf die Schicht (S3'), wobei die Beschichtungsmasse (BM4) hergestellt wurde durch Vereinigen von Wasser und einer anorganischen Säure mit einer
(g1) Oxidpartikel, ausgewählt aus den Oxiden der Elemente Ti, Al, Zr und/oder Si, die einen mittleren Partikeldurchmesser von 15 bis 150 nm, bevorzugt 40 bis 60 nm aufweisen, aufweisenden wässrigen Dispersion (D6), sowie mit Ethanol und mit einer
(g2) Binderformulierung (BF4), die mindestens zwei organofunktionelle Silane umfasst,
(h) optional Verfestigen der Beschichtungsmasse bei einer Temperatur von 100 °C bis 275 °C, vorzugsweise 120 bis 240 °C, um eine Schicht (S4`) zu schaffen.

12. Verfahren nach Anspruch 11,
**dadurch gekennzeichnet,**
**dass** als organofunktionelle Silane 3-Glycidyloxytriethoxysilan, Methytriethoxysilan und Tetraethoxysilan eingesetzt werden.

13. Verfahren nach Anspruch 11 oder 12,
**dadurch gekennzeichnet,**
**dass** in Binderformulierung (BF1) und (BF2) 3-Glycidyloxytriethoxysilan, Methytriethoxysilan und Tetraethoxysilan in einem Massenverhältnis von 2 bis 4 zu 0,5 bis 1,5 zu 1, besonders bevorzugt von 2,5 bis 3,5 zu 0,75 bis 1,25 zu 1, ganz besonders bevorzugt 3 zu 1 zu 1 eingesetzt werden.

14. Verfahren nach zumindest einem der Ansprüche 11 bis 13,
**dadurch gekennzeichnet,**
**dass** in Binderformulierung (BF3) und (BF4) 3-Glycidyloxytriethoxysilan, Methytriethoxysilan und Tetraethoxysilan in einem Massenverhältnis von 0,5 bis 1,5 zu 1,5 bis 2,5 zu 1, besonders bevorzugt von 0,75 bis 1,25 zu 1,75 bis 2,25 zu 1, ganz besonders bevorzugt 1 zu 2 zu 1 eingesetzt werden.

15. Verfahren nach zumindest einem der Ansprüche 11 bis 14,
**dadurch gekennzeichnet,**
**dass** die Beschichtungsmassen (BM3) und (BM4) identisch zusammengesetzt sind.

16. Verfahren nach zumindest einem der Ansprüche 11 bis 15,
**dadurch gekennzeichnet,**
**dass** die Beschichtungsmassen (BM1) und (BM2) identisch zusammengesetzt sind.

17. Verfahren nach zumindest einem der Ansprüche 11 bis 16,
**dadurch gekennzeichnet,**
**dass** als Substrat ein Polymervlies eingesetzt wird, das Fasern ausgewählt aus Polyacrylnitril, Polyester, Polyamid und/oder Polyolefin aufweist.

18. Verfahren nach zumindest einem der Ansprüche 11 bis 17,
**dadurch gekennzeichnet,**
**dass** das Verfestigen durch Durchlaufen eines Heißluft-Ofens, eines IR-Ofens oder eines sonstigen Ofens erfolgt.

19. Verfahren nach zumindest einem der Ansprüche 11 bis 18,
**dadurch gekennzeichnet,**
**dass** nach Schritt (f) oder, falls vorhanden, nach Schritt (h) eine weiterer Schritt (i) durchgeführt wird, bei dem auf die Schicht (S3`) oder, falls vorhanden, auf die Schicht (S4`) eine perfluoriertes Polymer aufweisende Polymerschicht aufgebracht wird.

20. Verfahren nach Anspruch 19,
**dadurch gekennzeichnet, dass** vor und/oder nach dem Aufbringen der ein perfluoriertes Polymer aufweisenden Polymerschicht (PS) eine Polymerbeschichtung (PB) aufgebracht wird, die gummiartige Polymer, bevorzugt Silikone enthält.

21. Verwendung eines Verbundwerkstoffes gemäß zumindest einem der Ansprüche 1 bis 10 oder hergestellt gemäß einem der Ansprüche 11 bis 20 als Gastrennmembran, bevorzugt zur Trennung von Methan von CO₂, H₂ von CO₂, H₂ von N₂, O₂ von N₂ oder He von CH₄, besonders bevorzugt zur Trennung von CH₄ von CO₂.

22. Gastrennvorrichtung enthaltend einen Verbundwerkstoff gemäß zumindest einem der Ansprüche 1 bis 10 oder hergestellt gemäß einem der Ansprüche 11 bis 20.

## Claims

1. Composite body having, on a porous substrate and in the interstices of the substrate that includes fibres, preferably of an electrically nonconductive material, a porous layer (1) composed of oxide particles bonded to one another and partly to the substrate that include at least one oxide selected from oxides of the elements Al, Zr, Ti and Si, preferably selected from Al₂O₃, ZrO₂, TiO₂ and SiO₂, and having, at least on one side, a further porous layer (2) including oxide particles bonded to one another and partly to layer (1) that include at least one oxide selected from oxides of the elements Al, Zr, Ti and Si, preferably selected from Al₂O₃, ZrO₂, TiO₂ and SiO₂,
where the oxide particles present in layer (1) have a greater median particle size than the oxide particles present in layer (2),
**characterized in that**
the median particle size (d50) of the oxide particles in layer (1), determined as specified in the description, is from 0.5 to 4 µm and the median particle size (d50) of the oxide particles in layer (2), determined as specified in the description, is from 0.015 to 0.15 µm, preferably 0.04 to 0.06 µm.

2. Composite body according to Claim 1,
**characterized in that**
the composite body has a Gurley number, determined as specified in the description, of 200 to 1700 sec, preferably 250 to 1200 sec and more preferably of 300 to 800 sec.

3. Composite body according to Claim 1 or 2,
**characterized in that**
the composite body has a thickness of 100 to 400 µm, preferably 125 to 200 µm and more preferably of 130 to 170 µm.

4. Composite body according to at least one of Claims 1 to 3,
**characterized in that**
the substrate is a nonwoven fabric, knit or laid scrim, preferably a nonwoven fabric or laid scrim, more preferably a nonwoven fabric.

5. Composite body according to at least one of Claims 1 to 4,
**characterized in that**
the fibres have a dimension of 1 to 200 g/km of fibre and are preferably composed of polyacrylonitrile, polyamide, polyester and/or polyolefin.

6. Composite body according to at least one of Claims 1 to 5,
**characterized in that**
the substrate has a thickness of 50 to 150 µm, preferably 100 to 130 µm, and a basis weight of 40 to 150 g/m², preferably 50 to 120 g/m², preferably 50 to 100 g/m² and most preferably 60 g/m².

7. Composite body according to at least one of Claims 1 to 6,
**characterized in that**
the composite body has an average pore size, determined as specified in the description, of 60 to 140, preferably 75 to 130 nm.

8. Composite body according to at least one of Claims 1 to 7,
**characterized in that**
the composite body, on the surface of layer (2), has a surface roughness Sdq, determined as specified in the description, of less than 10 µm, more preferably of less than 8 µm.

9. Composite body according to Claim 8,
**characterized in that**
a polymer layer (PS) is present atop or above layer (2) and is preferably a gas separation layer.

10. Composite body according to Claim 8 or 9,
**characterized in that**
the polymer layer (PS) contains and preferably consists of a perfluorinated polymer.

11. Process for producing a composite body, preferably according to at least one of Claims 1 to 10,
**characterized in that** it has the following steps:
(a) applying a coating composition (BM1) to and into a substrate having fibres and interstices between the fibres, where the coating composition is produced by combining
(a1) a dispersion (D1) of oxide particles produced by mixing oxide particles selected from the oxides of the elements Ti, Al, Zr and/or Si and having a median particle diameter (d50) of 0.5 to 4 µm with water, an inorganic acid, preferably nitric acid, and a dispersing aid,
(a2) a dispersion (D2) of oxide particles produced by mixing oxide particles selected from the oxides of the elements Ti, Al, Zr and/or Si and having a median particle diameter (d50) of 15 to 150 nm, preferably 40 to 60 nm, with water,
(a3) a binder formulation (BF1) produced by mixing at least two organofunctional silanes with an alkanol, preferably ethanol, an inorganic acid, preferably boric acid, and water,
(b) consolidating the coating composition (BM1) at a temperature of 100°C to 275°C, preferably 120 to 240°C, in order to create a first layer (S1'),
(c) optionally applying a coating composition (BM2) to at least layer (S1'), where the coating composition (BM2) is produced by combining
(c1) a dispersion (D3) of oxide particles produced by mixing oxide particles selected from the oxides of the elements Ti, Al, Zr and/or Si and having a median particle diameter (d50) of 0.5 to 4 µm with water, an inorganic acid, preferably nitric acid, and a dispersing aid,
(c2) a dispersion (D4) of oxide particles produced by mixing oxide particles selected from the oxides of the elements Ti, Al, Zr and/or Si and having a median particle diameter (d50) of 15 to 150 nm, preferably 40 to 60 nm, with water,
(c3) a binder formulation (BF2) produced by mixing at least two organofunctional silanes with an alkanol, preferably ethanol, an inorganic acid, preferably boric acid, and water,
(d) optionally consolidating the coating composition (BM2) at a temperature of 100°C to 275°C, preferably 120 to 240°C, in order to create a second layer (S2'),
(e) applying a coating composition (BM3) to layer (S1') or, if present, layer (S2'), where the coating composition (BM3) has been produced by combining water and an inorganic acid with an
(e1) aqueous dispersion (D5) including oxide particles selected from the oxides of the elements Ti, Al, Zr and/or Si and having a median particle diameter (d50) of 15 to 150 nm, preferably 40 to 60 nm, and with ethanol and with a
(e2) binder formulation (BF3) comprising at least two organofunctional silanes,
(f) consolidating the coating composition at a temperature of 100°C to 275°C, preferably 120 to 240°C, in order to create a layer (S3'),
(g) optionally applying a coating composition (BM4) to layer (S3'), where the coating composition (BM4) has been produced by combining water and an inorganic acid with an
(g1) aqueous dispersion (D6) including oxide particles selected from the oxides of the elements Ti, Al, Zr and/or Si and having a median particle diameter of 15 to 150 nm, preferably 40 to 60 nm, and with ethanol and with a
(g2) binder formulation (BF4) comprising at least two organofunctional silanes,
(h) optionally consolidating the coating composition at a temperature of 100°C to 275°C, preferably 120 to 240°C, in order to create a layer (S4').

12. Process according to Claim 11,
**characterized in that**
the organofunctional silanes used are 3-glycidyloxytriethoxysilane, methyltriethoxysilane and tetraethoxysilane.

13. Process according to Claim 11 or 12,
**characterized in that**
3-glycidyloxytriethoxysilane, methyltriethoxysilane and tetraethoxysilane are used in binder formulation (BF1) and (BF2) in a mass ratio of 2 to 4:0.5 to 1.5:1, more preferably of 2.5 to 3.5:0.75 to 1.25:1, most preferably 3:1:1.

14. Process according to at least one of Claims 11 to 13,
**characterized in that**
3-glycidyloxytriethoxysilane, methyltriethoxysilane and tetraethoxysilane are used in binder formulation (BF3) and (BF4) in a mass ratio of 0.5 to 1.5:1.5 to 2.5:1, more preferably of 0.75 to 1.25:1.75 to 2.25:1, most preferably 1:2:1.

15. Process according to at least one of Claims 11 to 14,
**characterized in that**
the coating compositions (BM3) and (BM4) are of identical composition.

16. Process according to at least one of Claims 11 to 15,
**characterized in that**
the coating compositions (BM1) and (BM2) are of identical composition.

17. Process according to at least one of Claims 11 to 16,
**characterized in that**
the substrate used is a polymer nonwoven including fibres selected from polyacrylonitrile, polyester, polyamide and/or polyolefin.

18. Process according to at least one of Claims 11 to 17,
**characterized in that**
the consolidating is effected by passage through a hot air oven, an IR oven or another oven.

19. Process according to at least one of Claims 11 to 18,
**characterized in that**,
in a further step (i) conducted after step (f) or, if present, after step (h), a polymer layer including perfluorinated polymer is applied to layer (S3') or, if present, to layer (S4').

20. Process according to Claim 19,
**characterized in that**, before and/or after the applying of the polymer layer (PS) including a perfluorinated polymer, a polymer coating (PB) containing rubber-like polymer, preferably silicones, is applied.

21. Use of a composite material according to at least one of Claims 1 to 10 or produced according to any of Claims 11 to 20 as gas separation membrane, preferably for separation of methane from CO₂, H₂ from CO₂, H₂ from N₂, O₂ from N₂ or He from CH₄, more preferably for separation of CH₄ from CO₂.

22. Gas separation apparatus comprising a composite material according to at least one of Claims 1 to 10 or produced according to any of Claims 11 to 20.

## Revendications

1. Corps composite, qui sur un substrat poreux et dans les interstices du substrat, qui comporte des fibres, de préférence en un matériau électriquement non conducteur, présente une couche poreuse (1) constituée de particules d'oxyde reliées les unes aux autres et partiellement au substrat, qui présentent au moins un oxyde choisi parmi les oxydes des éléments Al, Zr, Ti et Si, de préférence choisi parmi Al₂O₃, ZrO₂, TiO₂ et SiO₂, présente au moins sur une face une autre couche poreuse (2) qui comporte des particules d'oxyde reliées les unes aux autres et partiellement à la couche (1), qui comportent au moins un oxyde choisi parmi les oxydes des éléments Al, Zr, Ti et Si, de préférence choisi parmi Al₂O₃, ZrO₂, TiO₂ et SiO₂,
les particules d'oxyde présentes dans la couche (1) présentant une granulométrie moyenne supérieure à celle des particules d'oxyde présentes dans la couche (2), **caractérisé en ce que** la granulométrie moyenne (d50) des particules d'oxyde de la couche (1), déterminée comme indiqué dans la description, est de 0,5 à 4 µm, et la granulométrie moyenne (d50) des particules d'oxyde de la couche (2), déterminée comme indiqué dans la description, est de 0,015 à 0,15 µm, de préférence de 0,04 à 0,06 µm.

2. Corps composite selon la revendication 1, **caractérisé en ce que** le corps composite présente un indice de Gurley, déterminé comme indiqué dans la description, de 200 à 1 700 s, de préférence de 250 à 1 200 s et d'une manière particulièrement préférée de 300 à 800 s.

3. Corps composite selon la revendication 1 ou 2, **caractérisé en ce que** le corps composite présente une épaisseur de 100 à 400 µm, de préférence de 125 à 200 µm et d'une manière particulièrement préférée de 130 à 170 µm.

4. Corps composite selon au moins l'une des revendications 1 à 3, **caractérisé en ce que** le substrat est un non-tissé, un tissu tricoté ou une grille, de préférence un non-tissé ou une grille, d'une manière particulièrement préférée un non-tissé.

5. Corps composite selon au moins l'une des revendications 1 à 4, **caractérisé en ce que** les fibres présentent une dimension de 1 à 200 g/km de fibre et sont de préférence en polyacrylonitrile, polyamide, polyester et/ou polyoléfine.

6. Corps composite selon au moins l'une des revendications 1 à 5, **caractérisé en ce que** le substrat présente une épaisseur de 50 à 150 µm, de préférence de 100 à 130 µm et une masse surfacique de 40 à 150 g/m², de préférence de 50 à 120 g/m², de préférence de 50 à 100 g/m² et d'une manière tout particulièrement préférée de 60 g/m².

7. Corps composite selon au moins l'une des revendications 1 à 6, **caractérisé en ce que** le corps composite présente un diamètre de pore moyen, déterminé comme indiqué dans la description, de 60 à 140, de préférence de 75 à 130 nm.

8. Corps composite selon au moins l'une des revendications 1 à 7, **caractérisé en ce que** le corps composite présente sur la surface de la couche (2) une rugosité superficielle Sdq, déterminée comme indiqué dans la description, inférieure à 10 µm, d'une manière particulièrement préférée inférieure à 8 µm.

9. Corps composite selon la revendication 8, **caractérisé en ce que** sur ou au-dessus de la couche (2) est présente une couche polymère (PS), présente une couche de séparation des gaz.

10. Corps composite selon la revendication 8 ou 9, **caractérisé en ce que** la couche polymère (PS) contient un polymère perfluoré, de préférence en est constituée.

11. Procédé de fabrication d'un corps composite, de préférence selon au moins l'une des revendications 1 à 10, **caractérisé en ce qu'**il comprend les étapes suivantes :
(a) application d'une masse de revêtement (BM1) sur et dans un substrat qui comporte des fibres et des interstices entre les fibres, la masse de revêtement étant fabriquée par réunion
(a1) d'une dispersion (D1) de particules d'oxyde, fabriquée par mélange de particules d'oxyde choisies parmi les oxydes des éléments Ti, Al, Zr et/ou Si, qui présentent une granulométrie moyenne (d50) de 0,5 à 4 µm, avec de l'eau, un acide inorganique, de préférence l'acide nitrique, et un auxiliaire de dispersion,
(a2) d'une dispersion (D2) de particules d'oxyde, fabriquée par mélange de particules d'oxyde choisies parmi les oxydes des éléments Ti, Al, Zr et/ou Si, qui présentent une granulométrie moyenne (d50) de 15 à 150 nm, de préférence de 40 à 60 nm, avec de l'eau,
(a3) d'une formulation liante (BF1), fabriquée par mélange d'au moins deux silanes organo-fonctionnels avec un alcanol, de préférence l'éthanol, un acide inorganique, de préférence l'acide borique, et de l'eau,
(b) consolidation de la masse de revêtement (BM1) à une température de 100°C à 275 °C, de préférence de 120 à 240 °C, pour créer une première couche (S1'),
(c) éventuellement, application d'une masse de revêtement (BM2) sur au moins la couche (S1'), la masse de revêtement (BM2) étant fabriquée par réunion
(c1) d'une dispersion (D3) de particules d'oxyde, fabriquée par mélange de particules d'oxyde choisies parmi les oxydes des éléments Ti, Al, Zr et/ou Si, qui présentent une granulométrie moyenne (d50) de 0,5 à 4 µm, avec de l'eau, un acide inorganique, de préférence l'acide nitrique et un auxiliaire de dispersion,
(c2) d'une dispersion (D4) de particules d'oxyde, fabriquée par mélange de particules d'oxyde choisies parmi les oxydes des éléments Ti, Al, Zr et/ou Si, qui présentent une granulométrie moyenne (d50) de 15 à 150 nm, de préférence de 40 à 60 nm, avec de l'eau,
(c3) d'une formulation liante (BF2), fabriquée par mélange d'au moins deux silanes organo-fonctionnels avec un alcanol, de préférence l'éthanol, un acide inorganique, de préférence l'acide borique, et de l'eau,
(d) éventuellement, consolidation de la masse de revêtement (BM2) à une température de 100 °C à 275 °C, de préférence de 120 à 240 °C, pour créer une deuxième couche (S2'),
(e) application d'une couche de revêtement (BM3) sur la couche (S1') ou encore, si elle est présente, sur la couche (S2'), la masse de revêtement (BM3) ayant été fabriquée par combinaison d'eau et d'un acide inorganique avec
(e1) une dispersion aqueuse (D5) présentant des particules d'oxyde choisies parmi les oxydes des éléments Ti, Al, Zr et/ou Si, qui présentent une granulométrie moyenne (d50) de 15 à 150 nm, de préférence de 40 à 60 nm, ainsi qu'avec de l'éthanol et avec
(e2) une formulation liante (BF3), qui comprend au moins deux silanes organo-fonctionnels,
(f) consolidation de la masse de revêtement à une température de 100 °C à 275 °C, de préférence de 120 à 240 °C, pour créer une couche (S3'),
(g) éventuellement, application d'une masse de revêtement (BM4) sur une couche (S3'), la masse de revêtement (BM4) ayant été fabriquée par combinaison d'eau et d'un acide inorganique avec
(g1) une dispersion aqueuse (D6) présentant des particules d'oxyde choisies parmi les oxydes des éléments Ti, Al, Zr et/ou Si, qui comportent une granulométrie moyenne de 15 à 150 nm, de préférence de 40 à 60 nm, ainsi qu'avec de l'éthanol et avec
(g2) une formulation liante (BF4), qui comprend au moins deux silanes organo-fonctionnels,
(h) éventuellement, consolidation de la masse de revêtement à une température de 100 °C à 275 °C, de préférence de 120 à 240 °C, pour créer une couche (S4').

12. Procédé selon la revendication 11, **caractérisé en ce qu'**on utilise comme silanes organo-fonctionnels du 3-glycidyloxytriéthoxysilane, du méthyltriéthoxysilane et du tétraéthoxysilane.

13. Procédé selon la revendication 11 ou 12, **caractérisé en ce que** dans les formulations liantes (BF1) et (BF2), on utilise le 3-glycidyloxytriéthoxysilane, le méthyltriéthoxysilane et le tétraéthoxysilane selon une proportion en masse de 2 à 4:0,5 à 1,5:1, d'une manière particulièrement préférée de 2,5 à 3,5:0,75 à 1,25:1, d'une manière tout particulièrement préférée de 3:1:1.

14. Procédé selon au moins l'une des revendications 11 à 13, **caractérisé en ce que** dans les formulations liantes (BF3) et (BF4), le 3-glycidyloxytriéthoxysilane, le méthyltriéthoxysilane et le tétraéthoxysilane sont utilisés selon une proportion en masse de 0,5 à 1,5:1,5 à 2,5:1, d'une manière particulièrement préférée de 0,75 à 1,25:1,75 à 2,25:1, d'une manière tout particulièrement préférée de 1:2:1.

15. Procédé selon au moins l'une des revendications 11 à 14, **caractérisé en ce que** les masses de revêtement (BM3) et (BM4) ont des compositions identiques.

16. Procédé selon au moins l'une des revendications 11 à 15, **caractérisé en ce que** les masses de revêtement (BM1) et (BM2) ont des compositions identiques.

17. Procédé selon au moins l'une des revendications 11 à 16, **caractérisé en ce qu'**on utilise comme substrat un non-tissé polymère, qui présente des fibres choisies parmi les fibres de polyacrylonitrile, de polyester, de polyamide et/ou de polyoléfine.

18. Procédé selon au moins l'une des revendications 11 à 17, **caractérisé en ce que** la consolidation a lieu par passage dans un four à air chaud, un four IR ou un autre four.

19. Procédé selon au moins l'une des revendications 11 à 18, **caractérisé en ce que** après l'étape (f) ou, si elle est présente, après l'étape (h), on procède à une étape supplémentaire (i), lors de laquelle on applique sur la couche (S3') ou, si elle est présente, sur la couche (S4'), une couche polymère comportant un polymère perfluoré.

20. Procédé selon la revendication 19, **caractérisé en ce que**, avant ou après application de la couche polymère (PS) comportant un polymère perfluoré, on applique un revêtement polymère (PB) qui contient un polymère de type caoutchouc, de préférence des silicones.

21. Utilisation d'un matériau composite selon au moins l'une des revendications 1 à 10 ou fabriqué selon l'une des revendications 11 à 20 comme membrane de séparation des gaz, de préférence pour séparer le méthane du CO₂, le H₂ du CO₂, le H₂ du N₂, l'O₂ du N₂ ou le He du CH₄, d'une manière particulièrement préférée pour séparer le CH₄ du CO₂.

22. Dispositif de séparation des gaz contenant un matériau composite selon au moins l'une des revendications 1 à 10 ou fabriqué selon l'une des revendications 11 à 20.
